# EUROPÄISCHE PATENTSCHRIFT

(11) **EP 3 929 065 B1**
(45) Veröffentlichungstag und Bekanntmachung des Hinweises auf die Patenterteilung: **18.01.2023**
(21) Anmeldenummer: 21181674.9
(22) Anmeldetag: 25.06.2021
(51) Int. Cl.: B62D 21/02, B62D 21/09, B62D 21/12, B60S 9/12

(54) **ANBAUCHASSIS**
MOUNTING CHASSIS
CHÂSSIS DE MONTAGE

(30) Priorität: 26.06.2020 DE 202020103686 U
(43) Veröffentlichungstag der Anmeldung: 29.12.2021
(73) Patentinhaber: Alois Kober GmbH, 89359 Kötz (DE)
(72) Erfinder: ALBERT, Thomas, 89278 Nersingen (DE); WEBER, Hans-Peter, 89359 Kötz (DE); ZIMMERMANN, Maximilian, 89522 Heidenheim-Oggenhausen (DE)
(74) Vertreter: ERNICKE Patent- und Rechtsanwälte PartmbB

(56) Entgegenhaltungen:
- EP-A2- 3 208 161
- WO-A1-2020/144498
- DE-U1-202005 006 305
- DE-U1-202010 008 375
- US-A1- 2018 093 727

## Beschreibung

Die Erfindung betrifft ein Anbauchassis für einen Zugkopf mit den Merkmalen im Oberbegriff des Hauptanspruchs.

Ein solches Anbauchassis ist aus der DE 20 2005 006 305 U1 bekannt. Es weist zwei parallele profilierte Längsträger mit einem aufrechten Trägersteg und einem Obergurt sowie einer frontseitigen Befestigungsanordnung zur Verbindung mit einem motorisierten, vorzugsweise frontgetriebenen, Zugkopf an einer Anbaustelle auf. An der Anbaustelle ist in diesem Fall auch ein Adapter zwischen dem Anbauchassis und einem Zugkopfrahmen angeordnet, der einen Höhenversatz hat. Die Längsträger sind als gerade Profile mit durchgehend gleicher Höhe im Frontbereich ausgebildet und sind mit einem Chassisanschlussbereich des Adapters verschraubt. Die Längsträger haben dabei die gleiche Höhe wie der Chassisanschlussbereich. Sie erstrecken sich ungeteilt über eine hintere Achsanordnung hinweg und haben für deren Aufnahme einen nach unten offenen Aufnahmeschlitz.

Aus der EP 3 088 282 A2 ist ebenfalls ein Anbauchassis für die Verbindung mit einem Zugkopf und einem Adapter an einer Anbaustelle bekannt. Die Längsträger des Anbauchassis haben eine größere Höhe als der Chassisanschlussbereich des Adapters.

Die DE 29 30 036 A1 zeigt ein Wohnmobil mit einem von zwei Rahmengruppen gebildeten Fahrgestell. Die vordere und den Antriebsblock tragende Rahmengruppe weist statt eines Adapters eine nach unten abgestufte Form auf.

Es ist Aufgabe der vorliegenden Erfindung, eine weiter verbesserte Chassistechnik aufzuzeigen.

Die Erfindung löst diese Aufgabe mit den Merkmalen im Hauptanspruch.

Die beanspruchte Chassistechnik, d.h. das Anbauchassis und das damit ausgerüstete Fahrzeug, haben verschiedene Vorteile. Insbesondere sind eine verringerte Bauhöhe des Anbauchassis, eine Tieferlegung des Anbauchassis und eine daraus resultierende Absenkung eines Fahrzeugaufbaus und des Fahrzeugschwerpunkts möglich.

Die Höhe der beanspruchten Längsträger kann z.B. zwischen 100 mm und 150 mm, vorzugsweise ca. 125 mm, betragen. Die Höhe der beanspruchten Längsträger kann z.B. ca. 90 mm geringer als die in der Praxis, z.B. gemäß der DE 20 2005 006 305 U1, übliche Höhe von deutlich über 200 mm. Dementsprechend kann der Aufbau beim beanspruchten Anbauchassis eine um ca. 90 mm tiefere Lage als in der Praxis haben.

Die beanspruchten Längsträger des Anbauchassis weisen jeweils einen in Trägerlängsrichtung erstreckten und quer zur Trägerlängsrichtung und nach oben abstehenden Trägeransatz auf, dessen Oberkante mit Abstand oberhalb des Obergurts des Längsträgers angeordnet ist. Die Unterkante des Trägeransatzes kann bündig mit der Unterkante oder einem Untergurt des Längsträgers verlaufen. Die Befestigungsanordnung ist am Trägeransatz angeordnet.

Die beanspruchte Chassistechnik ermöglicht platz- und gewichtssparende profilierte Längsträger mit geringer Trägersteghöhe, die trotzdem dank des nach oben überstehenden Trägeransatzes fest, sicher und tragfähig am Zugkopfrahmen oder an einem Adapter befestigt werden können. Der Trägeransatz kann ein integraler Bestandteil des jeweiligen Längsträgers sein.

Der Trägeransatz dient zur Anlage und Befestigung am Zugkopfrahmen oder Adapter und kann hierfür optimiert werden. Die Wirkrichtung der Befestigung ist quer zur Trägerlängsrichtung ausgerichtet. Die Querschnittsform des Längsträgers ändert sich im Bereich des Trägeransatzes. Der Trägeransatz kann eine Verlängerung des Trägerstegs darstellen. Der Obergurt des Längsträgers kann verkürzt sein. Er kann an oder vor dem Trägeransatz enden.

Die Längsträger des Anbauchassis können am vorderen Endbereich und an der Anbindungsstelle zum Zugkopf durch eine Quertraverse versteift sein. Die Quertraverse kann mit den bevorzugt plattenförmigen und dünnwandigen Trägeransätzen fest verbunden sein und diese in Querrichtung abstützen. Die Anbindungsstelle der Trägeransätze und der Quertraverse kann durch eine Längsversteifung zusätzlich stabilisiert sein. Diese ist auch günstig für die mechanische Stabilisierung der Übergangsstelle zwischen den Trägeransätzen und den anschließenden Längsträgerbereichen, insbesondere den aufrechten Trägerstegen.

Der nach oben vom Obergurt des Längsträgers abstehenden Trägeransatz ermöglicht einen eigenen Höhenversatz im Bereich des Anbauchassis. Um diesen Höhenversatz bzw. Abstand zwischen der Oberkante des Trägeransatzes und dem Obergurt kann der Aufbau tiefer gelegt werden. Dieser chassisseitige Höhenversatz kann sich mit einem eventuellen Höhenversatz eines Adapters addieren. Durch eine Kumulierung des Höhenversatzes ist eine besonders niedrige Aufbaulage möglich.

Die Tieferlegung hat verschiedene Vorteile. Zum einen kann der Fahrzeugschwerpunkt gesenkt werden, was für die Fahrstabilität und die Fahrdynamik von Vorteil ist.

Außerdem kann die Aufbauhöhe über dem Untergrund verringert werden. Dies verkleinert die frontale Anströmfläche im Fahrbetrieb sowie den Luftwiderstand und verbessert die aerodynamischen Eigenschaften. Für Verkaufsfahrzeuge und deren Theken ist die Tieferlegung ergonomisch günstig. Andererseits kann die Tieferlegung zu anderen Zwecken genutzt werden, z.B. zur Schaffung zusätzlicher Stauräume im Bodenbereich des Aufbaus, z.B. unter Bildung eines Doppelbodens. Der Aufbau kann in diesem Fall die bisher übliche Dachhöhe über dem Untergrund haben.

Die beanspruchten Längsträger haben eine geringere Höhe als beim eingangs genannten Stand der Technik. Die geringe Höhe begünstigt eine niedrige Aufbaulage. Durch den überstehenden Trägeransatz kann trotz der geringen Längsträgerhöhe eine große Befestigungsfläche für die am Trägeransatz und an der Anbaustelle angreifende Befestigungsanordnung vorhanden sein. Bereiche der Befestigungsanordnung, insbesondere ein oder mehrere Befestigungsmittel, können sich oberhalb der Obergurte der Längsträger befinden. Der Trägeransatz kann vorteilhafterweise an den aufrechten Trägersteg der Längsträger angeformt oder angesetzt werden. Die Längsträger haben in der beanspruchten Ausbildung trotz Verringerung der Trägersteghöhe eine hohe Stabilität und Befestigungssicherheit am Zugkopf.

Für die Befestigung am Zugkopf kann ein Adapter vorhanden sein, der auch einen Höhenversatz aufweisen kann. Ein Adapter ist nicht zwingend notwendig. Die Längsträger können mit dem Trägeransatz auch direkt am Zugkopfrahmen des Zugkopfes montiert und befestigt werden. Ein Adapter kann in unterschiedlicher Weise zugeordnet sein. Er kann ein bereits vorhandener Bestandteil des Zugkopfes sein. Er kann alternativ ein Zusatzteil sein, welches zwischen Zugkopfrahmen und Längsträgern angeordnet wird. Ein solcher Adapter kann zum Anbauchassis gehören oder kann eine eigenständige Einheit darstellen.

Die Längsträger des Anbauchassis können an ein oder mehreren Stellen in zwei oder mehr Trägerabschnitte unterteilt werden, die sich in Längs- oder Axialrichtung hintereinander reihen. Dies hat verschiedene Vorteile, z.B. für ein verringertes Packmaß beim Transport, Flexibilität und Modularität bei Längenvariationen des Anbauchassis, Steigerungsmöglichkeiten für die Chassissteifigkeit trotz geringer Längsträgerhöhe und dgl..

Das Trägerchassis kann eine Achsanordnung aufweisen. Die Trennstelle der Längsträger kann sich im Bereich der Achsanordnung befinden, wobei die Trägerabschnitte mit der Achsanordnung, insbesondere mit Achsböcken der Achsanordnung, fest verbindbar oder verbunden sind. Die Trägerabschnitte können dabei axial voneinander distanziert und jeweils eigenständig mit einem gemeinsamen Achsbock verbunden sein. Bei einer Tandem- oder Trippelachse kann jeweils ein weiterer Trägerabschnitt zwischen den Achsen angeordnet und mit deren Achsböcken fest verbindbar oder verbunden sein.

Diese Art der Verbindung hat verschiedene Vorteile. Teile der Achsanordnung, insbesondere ein Achskörper, können sich auf Höhe der Längsträger und zwischen deren Längsträgerabschnitten befinden. Die Trägerabschnitte können dabei unter Bildung eines Spalts axial voneinander distanziert sein. Der Achskörper kann im Spalt angeordnet sein und kann sich quer durch den geteilten Längsträger erstrecken. Die Höhe der Trägerabschnitte kann der Höhe oder dem äußeren Durchmesser des Achskörpers entsprechen oder geringfügig größer sein. Die Teilung der Längsträger mit dem Achskörper im Spalt ermöglicht eine kompakte Bauweise und kommt der Höhenreduzierung der Längsträger sowie der vorteilhaften tiefen Chassislage entgegen.

Der Achsbock kann die Trennstelle und den Spalt auf Höhe der Trägerabschnitte überbrücken. Durch die jeweils eigenständige Befestigung am Achsbock haben die Längsträger und das Anbauchassis trotzdem eine hohe Steifigkeit. Eine Tieferlegung des Aufbaus ist ohne Stabilitätsverluste möglich.

Die Achsböcke können jeweils ein versteiftes plattenartiges Tragprofil aufweisen. Das Tragprofil kann bis zum Unterrand und ggf. unter die Längsträger und die Trägerabschnitte reichen. Das Tragprofil kann sich über die Trennstelle und den Spalt hinweg erstrecken. Es kann die Enden der distanzierten Trägerabschnitte verbinden und abstützen. Die Enden der distanzierten Trägerabschnitte sind jeweils mit dem Tragprofil fest und bevorzugt lösbar verbindbar oder verbunden.

Das Tragprofil ist quer zum Achskörper ausgerichtet und ist an dessen Endbereich befestigt. Es weist eine bevorzugt umfangseitig geschlossene Aufnahmeöffnung und einen dortigen Stützansatz für den Achskörper auf. Der bevorzugt keilförmige Stützansatz erstreckt sich vom Achskörper bis zum oberen Rand des Achsbocks, insbesondere des Tragprofils, und ist mit dem Achskörper und dem Tragprofil starr verbunden, insbesondere verschweisst.

Für die verschiedenen, bevorzugt lösbaren Befestigungen sind Schraubverbindungen vorteilhaft. Besonders günstig sind Napfverschraubungen mit Prägungen und gegenseitigen formschlüssigen Abstützungen der zu verbindenden Teile zusätzlich zur Schraubverbindung.

Die heckseitig am Anbauchassis angeordnete Achsanordnung kann eine oder mehrere Achsen in wählbarer Ausführung aufweisen. Vorzugsweise ist die jeweilige Achse als Lenkerachse ausgebildet, z.B. als Längslenkerachse mit einem geraden und bevorzugt rohrförmigen Achskörper und schwenkbaren Radlenkern. Die Achsen können gefedert sein, wobei z.B. eine im Achsrohr integrierte Achsfederung, insbesondere Drehstab- oder Gummifederung, und/oder eine zwischen Achsbock und Radlenker angeordnete Schraubenfederung, Luftfederung oder dgl. vorhanden ist. Ferner können Stoßdämpfer angebaut sein.

Die Achsböcke, insbesondere ihre Tragprofile, können eine größere Höhe als die Längsträger und ihre Trägerabschnitte aufweisen. Hierdurch wird ein aufrechter Überstand der Achsböcke, insbesondere ihrer Tragprofile, gegenüber den in der Höhe reduzierten Längsträgern und Trägerabschnitten gebildet. Dies hat verschiedene Vorteile. Einerseits ergibt sich eine bessere Anbausituation für Dämpf- und Federmittel, wobei auch Umbauten oder Nachrüstungen möglich sind. Andererseits steigert die Achsbockhöhe das Flächenträgheitsmoment und die Festigkeit des Trägerchassis im Achsbereich. Insbesondere können die Achsböcke, insbesondere ihre Tragprofile, eine besonders steife und tragfähige Verbindung zwischen den distanzierten Trägerabschnitten bilden.

Die mechanische Belastbarkeit des Anbauchassis im Bereich der Achsanordnung kann weiter gesteigert werden durch streifenförmige Versteifungselemente am besagten Überstand der Achsböcke und/oder durch Versteifungseinlagen in den Längsträgern bzw. Trägerabschnitten im Anschlussbereich an den jeweiligen Achsbock. An den Versteifungselementen und/oder Versteifungseinlagen können innenseitig über Durchgangsöffnungen Schraubmuttern befestigt, insbesondere angeschweisst sein. Dies ist vorteilhaft für eine vereinfachte nachträgliche Montage von äußeren Anbauteilen, z.B. Luftfederelementen, Hubstützenanordnungen oder dgl..

Das Anbauchassis kann bei der Herstellung oder nachträglich mit einer Hubstützenanordnung versehen werden. Diese kann bevorzugt im Bereich einer hinteren Achsanordnung montierbar oder montiert sein. Die Hubstützenanordnung kann beidseitig und bevorzugt außenseitig an den Längsträgern, insbesondere an den vorderen oder hinteren Trägerabschnitten, angeordnete Hubstützen umfassen. Diese können z.B. als hydraulische Hubstützen ausgebildet sein. Sie können mit einer hydraulischen Versorgungseinheit verbunden sein. Hierbei können die Hubstützen jeweils einzeln oder gemeinsam, insbesondere paarweise, mit einer hydraulischen Versorgungseinheit ausgestattet sein. Die Hubstützen können mittels eines Montagebeschlags am Anbauchassis befestigt werden, der auch eine Querstütze umfassen kann.Die Querstütze kann einteilig oder mehrteilig, z.B. aus zwei kleinen z.B. U-förmigen Profilen, ausgebildet sein. Sie kann längenveränderlich, insbesondere teleskopierbar, gestaltet sein.

Der Montagebeschlag, insbesondere die direkt zwischen den einander gegenüberliegenden Hubstützen angeordnete Querstütze, kann die Hubstützen in ihrer Lage und Funktion stabilisieren und kann die Zusatzfunktion einer Versteifung des Anbauchassis haben. Der Montagebeschlag, insbesondere die Querstütze, und die anderen genannten Versteifungen können die verringerte Höhe der Längsträger und deren reduzierte Tragkraft, insbesondere im Bereich der hinteren Achsanordnung, kompensieren.

Das Anbauchassis kann als Leiterrahmen ausgebildet sein, wobei die Obergurte der Längsträger und die Oberseite von ein oder mehreren Querträgern und/oder Seitenauslegern höhenbündig aneinander anschließen. Das Anbauchassis kann dadurch eine ebene tragende Oberseite aufweisen, was für die Abstützung eines Aufbaubodens besonders vorteilhaft ist. Das Anbauchassis kann nach unten offen sein. Es kann einen zumindest weitgehend freien Innenbereich zwischen den Längsträgern aufweisen, der ggf. für Aufbauaggregate, Hubstützen, Ersatzrad oder dgl. nutzbar ist.

Die Längsträger des Anbauchassis können über die gesamte Chassislänge gerade und parallel zueinander verlaufen. Hiervon kann abgewichen werden. Der hintere Chassisbereich kann z.B. in seiner Breite verjüngt werden, z.B. durch eine Annäherung bzw. gebogene Form der Längsträger.

In den Unteransprüchen sind weitere vorteilhafte Ausgestaltungen der Erfindung angegeben.

Das beanspruchte Anbauchassis kann folgende Ausgestaltungen aufweisen, die einzeln oder in beliebiger Kombination benutzt werden können.

Die Längsträger sind bevorzugt aus Metall, insbesondere Stahl, ausgebildet. Die Längsträger können jeweils einen einfach oder mehrfach abgewinkelten Querschnitt, insbesondere einen L- oder C-förmigen Querschnitt, mit einem aufrechten Trägersteg und einem jeweils hiervon abgebogenen Obergurt und/oder Untergurt aufweisen.

Die Längsträger können jeweils eine seitlich offene Querschnittsform haben.

Die Längsträger können jeweils als geschnittene und gebogene dünnwandige Blechbauteile ausgebildet sein. Die Wandstärke kann z.B. zwischen 2 bis 4 mm liegen.

Der Obergurt eines Längsträgers kann vor oder an einem frontseitigen und nach oben abstehenden Trägeransatz enden.

An der Übergangsstelle zwischen einem Trägeransatz und einem Obergurt des Längsträgers kann eine Ausnehmung angeordnet sein.

Die Längsträger können jeweils mit ihrem frontseitigen und nach oben abstehenden Trägeransatz an einem Zugkopf mittelbar über einen Adapter oder unmittelbar an einem Rahmenteil eines Zugkopfrahmens befestigt werden.

Ein Adapter kann einen Höhenversatz (h1) zwischen seinem zugkopfseitigen Oberteil oder Rahmenanschlussteil und seinem Unterteil oder Chassisanschlussteil aufweisen.

Zwischen der Oberkante eines frontseitigen und nach oben abstehenden Trägeransatzes und dem Obergurt des anschließenden Längsträgerbereichs kann ein Höhenversatz (h2) ausgebildet sein.

Der aufrechte Trägersteg der Längsträger kann eine geringere Höhe als ein Unterteil oder Chassisanschlussteil eines Adapters aufweisen.

Der aufrechte Trägersteg der Längsträger kann eine geringere Höhe als ein Rahmenteil eines Zugkopfrahmens aufweisen.

Die Befestigungsmittel an einem Trägeransatz können in mehreren bevorzugt parallelen Befestigungsreihen übereinander angeordnet sein.

Zumindest ein Befestigungsmittel, insbesondere eine Befestigungsreihe, kann oberhalb des Obergurts des Längsträgers angeordnet sein.

Die Längsträger können jeweils in zwei oder mehr Trägerabschnitte unterteilt sein.

Das Anbauchassis kann eine heckseitige Achsanordnung aufweisen.

Die heckseitige Achsanordnung kann eine oder mehrere Achsen, insbesondere Lenkerachsen, und Achsböcke aufweisen. Die ein oder mehreren Achsen können gefedert sein.

An den Achsböcken können jeweils Dämpfmittel und ggf. Federmittel angeordnet sein.

Die ein oder mehreren Achsen können als Lenkerachsen ausgebildet sein. Die ein oder mehreren Achsen können einen mit einem Achsbock verbunden Achskörper, insbesondere ein Achsrohr, aufweisen.

Die zwei oder mehr Trägerabschnitte von unterteilten Längsträgern können jeweils an der Achsanordnung, insbesondere an deren Achsböcken, befestigbar oder befestigt sein.

Die Enden von zwei oder mehr Trägerabschnitten von unterteilten Längsträgern können axial unter Bildung eines Spalts voneinander distanziert sein.

Ein Achskörper einer Achse kann im Spalt zwischen den Trägerabschnitten angeordnet sein. Der Achsbock kann den Spalt zwischen den Trägerabschnitten auf Höhe der Trägerabschnitte überbrücken.

Die Achsböcke können jeweils ein versteiftes plattenartiges Tragprofil mit einer Aufnahmeöffnung und einem dortigen Stützansatz für einen Achskörper aufweisen.

Die Befestigungsmittel können als Schraubverbindungen, insbesondere als formschlüssige Napfverschraubungen, ausgebildet sein.

Das Anbauchassis kann als Leiterrahmen ausgebildet sein. Es kann mehrere mit den Längsträgern verbundene Querträger und ggf. Seitenausleger aufweisen.

Die Querträger und ggf. die Seitenausleger können mit ihrer Oberseite bündig zu den Obergurten der Längsträger angeordnet sein.

Das mit dem Anbauchassis ausgestattete und mit einem motorisierten, bevorzugt frontgetriebenen Zugkopf versehene Fahrzeug, insbesondere Strassenfahrzeug, kann einen Aufbau mit einem Boden aufweisen, welcher auf dem Anbauchassis und den Längsträgern aufliegt und abgestützt ist.

Der Aufbau des Fahrzeugs kann um einen kumulierten Höhenversatz (h1,h2) tiefer gelegt sein.

Die Erfindung ist in den Zeichnungen beispielhaft und schematisch dargestellt. Im Einzelnen zeigen
- Figur 1:: ein Fahrzeug mit einem Zugkopf, einem Anbauchassis und einen Aufbau,
- Figur 2 und 3:: ein Anbauchassis mit Teilen eines Zugkopfs in verschiedenen perspektivischen Ansichten und unterschiedlichen Detailausbildungen,
- Figur 4:: eine Draufsicht auf die Anordnung von Figur 3,
- Figur 5:: eine abgebrochene perspektivische Ansicht einer Anbaustelle zwischen Längsträgern des Anbauchassis und einem Adapter am Zugkopf,
- Figur 6:: eine abgebrochene Seitenansicht eines Adapters und eines angebauten Längsträgers mit einem Trägeransatz,
- Figur 7 und 8:: verschiedene perspektivische Ansichten eines Längsträgers,
- Figur 9 und 10:: eine Quertraverse zwischen den Trägeransätzen in verschiedene Ansichten,
- Figur 11 und 12:: verschiedene abgebrochene Ansichten einer Achsanordnung und ihres Anbaus an einem Trägerchassis,
- Figur 13:: eine perspektivische Ansicht eines Achsbocks der Achsanordnung und
- Figur 14:: eine perspektivische, abgebrochene und geschnittene Ansicht eines hinteren Chassisbereichs,
- Figur 15 und 16:: zwei weitere Varianten des Anbauchassis mit verschiedenen Achsanordnungen,
- Figur 17 bis 21:: Detaildarstellungen von Varianten der Achsböcke und geteilten Längsträger,
- Figur 22:: ein Anbauchassis mit einer Hubstützenanordnung und
- Figur 23 bis 25:: Detaildarstellungen der Hubstützenanordnung und ihres Montagebeschlags.

Die Erfindung betrifft ein Anbauchassis (4) für einen motorisierten Zugkopf (2). Die Erfindung betrifft auch ein Fahrzeug (1) mit einem Zugkopf (2) und einem Anbauchassis (4) .

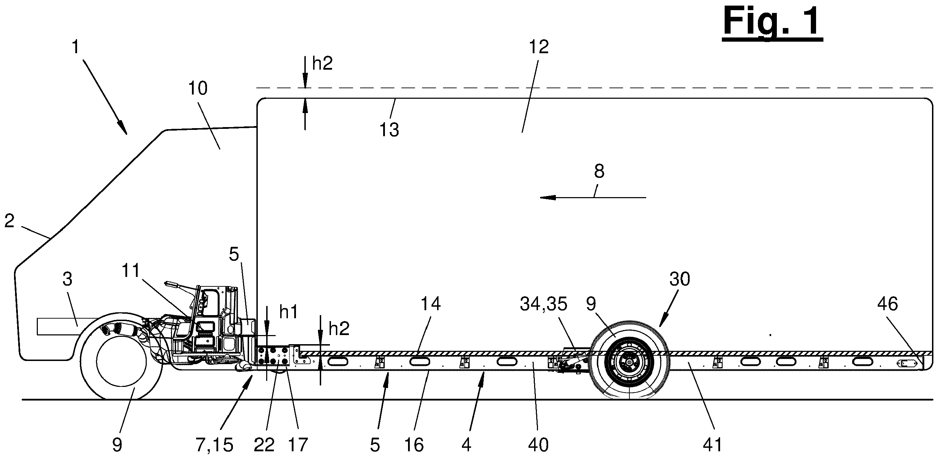

Das in Figur 1 schematisch dargestellte Fahrzeug (1) ist als Kraftfahrzeug und insbesondere als Straßenfahrzeug ausgebildet. Es weist einen motorisierten Zugkopf (2) und ein Anbauchassis (4) auf, die direkt oder mittelbar über einen gezeigten Adapter (5) miteinander an einer Anbaustelle (15) fest verbunden sind. Der motorisierte Zugkopf (2) weist vorzugsweise einen Frontantrieb mit einem Triebblock (11) auf. Dieser kann einen Antriebsmotor, ein Getriebe, eine angetriebene Vorderachse mit Rädern (9), eine Auspuffanlage und einen Tank sowie weitere Komponenten aufweisen. Der Zugkopf (2), der auch als Triebkopf bezeichnet wird, weist einen Zugkopfrahmen (3) auf. Dieser ist mit dem Adapter (5) verbunden. Der Zugkopf (2) kann ferner eine Kabine (10) mit Sitzen, Lenkeinrichtung etc. aufweisen.

Das Anbauchassis (4) weist eine heckseitige Achsanordnung (30) mit einer Bremseinrichtung (33) auf. Die Achsanordnung (30) ist bei einem Frontantrieb des Zugkopfs (2) z.B. als nicht angetriebene Schleppachsenanordnung ausgebildet. Die Bremseinrichtung (33) kann z.B. Scheibenbremsen mit hydraulischer Betätigung oder Trommelbremsen mit einer mechanischen Seilzugbetätigung aufweisen.

Auf dem Anbauchassis (4) ist ein Aufbau (12) angeordnet, der z.B. eine kastenförmige Form hat. Die Kabine (10) kann separat angeordnet oder in den Aufbau (12) integriert sein. Der Aufbau (12) ist z.B. als Wohnmobilaufbau gestaltet. Der Aufbau (12) weist ein Dach (13) und einen Boden (14) auf, welcher auf dem Anbauchassis (4) aufliegt assis (4) kann in den gezeigten Ausführungsformen als Leiterrahmen (27) ausgebildet sein, der außer den Längsträgern (16) mehrere Querträger (28) aufweist. Diese können zwischen den parallelen Längsträgern (16) angeordnet und mit diesen fest verbunden sein. Alternativ oder zusätzlich können mehrere Seitenausleger (29) vorhanden sein, die außenseitig an den Längsträgern (16) angeordnet und mit diesen fest verbunden sind. Die Querträger (28) und die Seitenausleger (29) können gemeinsam und miteinander fluchtend angeordnet sein. Am Heck kann eine Hecktraverse (46) angebaut sein.

Das Anbauchassis (4) kann nach unten offen sein und einen Innenbereich zwischen den Längsträgern (16) aufweisen. Der auf dem Anbauchassis (4) liegende Aufbauboden (14) kann den Fahrzeugboden bilden. Der Innenbereich des Anbauchassis (4) kann bis auf die Querträger (28) frei sein. Alternativ können flach bauende Aufbauaggregate, z.B. Tanks für Wasser und Abwasser, ein Ersatzrad oder dgl. im Innenbereich angeordnet und von unten zugänglich sein. Sie können am Anbauchassis (4) oder am Aufbauboden (14) ggf. lösbar befestigt und abgestützt sein.

Das Fahrzeug (1) kann eine Hubstützenanordnung (54) mit Hubstützen, z.B. Hydraulikzylinder, aufweisen, die am Anbauchassis (4), insbesondere an den Längsträgern (16), und ggf. am Zugkopf (2) montierbar oder montiert sind. Eine zentrale oder dezentrale Versorgungstechnik kann sich im besagten Innenbereich oder an anderer Stelle des Anbauchassis (4) befinden. Die Versorgungstechnik kann z.B. eine Hydraulikversorgung mit ein oder mehreren hydraulischen Versorgungseinheiten (57), eine Stromversorgung, Steuertechnik, eine Nivelliereinrichtung mit ein oder mehreren Neigungssensoren, drahtlose Kommunikationsmittel und dgl. umfassen.

Das Anbauchassis (4) kann vom Chassishersteller komplett konfiguriert und geliefert werden. Es kann auch in Teilen geliefert und erst beim Fahrzeughersteller zusammengebaut und montiert werden. Eine Lieferung in Teilen spart Platz und Lager- sowie Versandkosten und dient u.a. der Transportoptimierung.

Das Fahrzeug (1) hat eine in Figur 1 durch einen Pfeil angedeutete und vorwärts gerichtete Fahrtrichtung (8). Diese bildet zugleich die Axialrichtung. Die Bezugnahmen auf Frontseite und Heckseite des Fahrzeugs (1) und des Anbauchassis (4) beziehen sich auf die Fahrtrichtung (8). Die Frontseite ist in Fahrtrichtung (8) vorn gelegen. Die Richtungsangaben oben und unten sowie aufrecht beziehen sich auf die vorgesehene Einbaulage des Anbauchassis (4) und der Längsträger (16) am Fahrzeug (1).

Die Längsträger (16) haben eine profilierte Querschnittsform und bestehen jeweils aus einem aufrechten Trägersteg (18) und einem Obergurt (19). Zusätzlich oder alternativ kann ein Untergurt (20) vorhanden sein. Der Ober- und Untergurt (19,20) schließt jeweils seitlich an den oberen und unteren Rand des Trägerstegs (18) an und kann quer dazu abstehen. Der Trägersteg (18) ist als ebene Wand ausgebildet und kann Ausnehmungen aufweisen, die einer Gewichtsersparnis, einer Optimierung von Kraft- und Spannungsverläufen, insbesondere Zugspannungen aus Biegebelastungen, etc. dienen können und entsprechend gestaltet sein können. Die Längsträger (16) können aus Metall, insbesondere Stahl, bestehen. Sie können als geschnittene und gebogene dünnwandige Blechbauteile ausgebildet sein.

Die Längsträger (16) haben vorzugsweise nur einen Trägersteg (18) und eine seitlich offene profilierte Querschnittsform. Die offene Profilform hat ein geringeres Gewicht als umfangsseitig geschlossene Profile mit einer runden oder prismatischen Querschnittsform.

In der gezeigten Ausführungsform haben die Längsträger im Querschnitt eine C-Form, wobei die Gurte (19,20) von den Trägerstegrändern seitlich abgebogen und am Ende zumindest bereichsweise über die Trägerlänge noch einmal umgekantet sind. Die Trägerstege (18) liegen jeweils außen, wobei die Gurte (19,20) zum Innenraum des Anbauchassis (4) ragen. In einer anderen und nicht dargestellten Ausführungsform können die Längsträger (16) einen anderen, z.B. L-förmigen, Querschnitt haben. Der besagte Obergurt (19) und Untergurt (20) kann auch jeweils als obere und untere Längsträgerkante ausgebildet sein.

Die Längsträger (16) weisen jeweils an ihrer Frontseite einen Trägeransatz (17) auf, der eine aufrechte Lage hat und sich in Trägerlängsrichtung der Längsträger (16) erstreckt sowie quer zur Trägerlängsrichtung nach oben absteht. Der Trägeransatz (17) ist ein integraler Bestandteil des Längsträgers (16). Er stellt eine Verlängerung des Trägerstegs (18) dar und kann in dessen Ebene verlaufen. Der Trägeransatz (17) ragt über den Obergurt (19) nach oben hinaus.

Der Obergurt (19) endet am Trägeransatz (17). Er ist in der Länge verkürzt und reicht nicht bis zum frontseitigen Ende des Längsträgers (16). Der Trägeransatz (17) dient zur Befestigung des jeweiligen Längsträgers (16) am Zugkopf (2) bzw. am Adapter und weist eine bevorzugt lösbare Befestigungsanordnung (22) mit Befestigungsmitteln (23) auf. Die Wirkachse der Befestigungsmittel (23) ist quer zur Trägerlängsrichtung und zur Ebene des Trägerstegs (18) gerichtet.

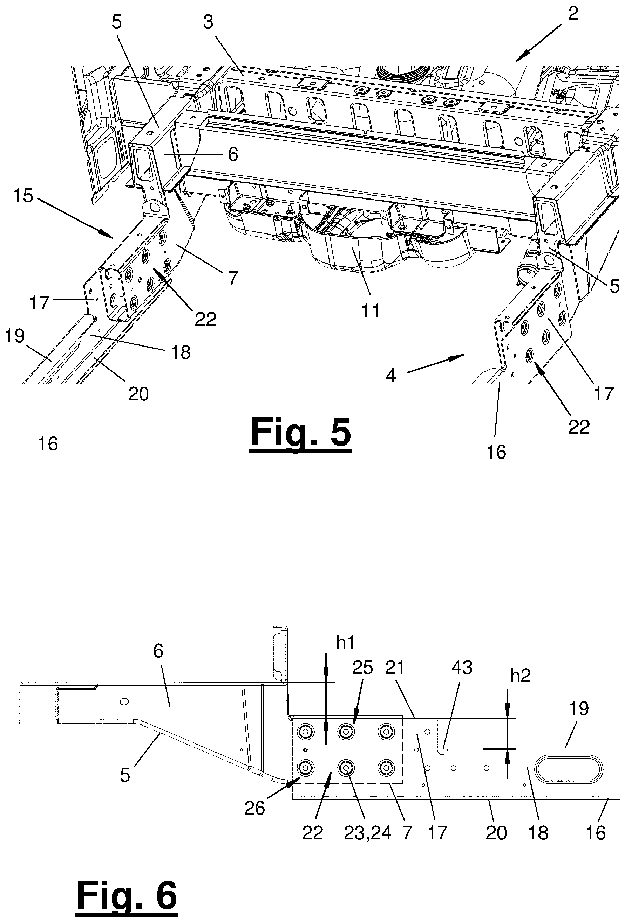

Wie Figur 6 in einer abgebrochenen Seitenansicht verdeutlicht, ist die Oberkante (21) des Trägeransatzes (17) mit Abstand oberhalb des Obergurts (19) angeordnet. Zwischen der Oberkante (21) und dem Obergurt (19) wird ein Höhenversatz (h2) gebildet. Die Oberkante (21) und der Obergurt (19) verlaufen bevorzugt parallel.

Die Höhe des Trägeransatzes (17) des Trägerstegs (18) ist wesentlich größer als die Höhe des Trägerstegs (18) im anderen und profilierten Längsträgerbereich. Der Trägeransatz (17) ist bevorzugt eben und plattenförmig ausgebildet. Er kann an den Trägersteg (18) frontseitig einstückig angeformt sein. Der Trägeransatz (17) verlängert fluchtend den Trägersteg (18). Der Untergurt (20) kann über die Länge des Längsträgers (16) durchgehen und kann auch im Bereich des Trägeransatzes (17) vorhanden sein. Der Trägeransatz (17) kann in einer Abwandlung auch über den Untergurt (20) oder den unteren Längsträgerrand nach unten abstehen.

Die Längsträger (16) werden in der gezeigten Ausführungsform über den zwischengeschalteten Adapter (5) am Zugkopf (2) und dessen Zugkopfrahmen (3) befestigt. Der z.B. abgewinkelte Adapter (5) ist in Figur 5 und 6 dargestellt. Er weist ein Oberteil (6) und ein Unterteil (7) auf. Das Oberteil (6) ist als Rahmenanschlussteil für den Zugkopfrahmen (3) ausgebildet. Es kann in den Zugkopfrahmen (3) integriert sein. Das Unterteil (7) bildet ein Chassisanschlussteil und wird an der Anschlussstelle (15) mit dem frontseitigen Trägeransatz (17) über die frontseitige Befestigungsanordnung (22) fest verbunden. Die Oberkanten von Unterteil (7) bzw. Chassisanschlussteil und Trägeransatz (17) liegen bevorzugt im Wesentlichen auf gleicher Höhe. Wie Figur 6 verdeutlicht, wird am Adapter (5) zwischen dem Oberteil (6) und dem Unterteil (7) ebenfalls ein Höhenversatz (h1) gebildet.

Die Befestigungsanordnung (22) weist mehrere am Trägeransatz (17) angeordnete Befestigungsmittel (23) auf, die z.B. als Schraubverbindungen ausgeführt sind. Die Befestigungsmittel (23) sind z.B. in zwei oder mehr bevorzugt parallelen und längslaufenden Befestigungsreihen (25,26) übereinander angeordnet. Zumindest ein Befestigungsmittel (23), insbesondere eine Befestigungsreihe (25), ist oberhalb des Obergurts (19) angeordnet. Durch den nach oben vorstehenden Trägeransatz (17) wird eine gegenüber der Trägersteghöhe vergrößerte Anbau- und Befestigungsfläche an der Anbaustelle (15) gebildet. Der Trägeransatz (17) ist zur Anlage und Verbindung mit dem Adapter (5) und dessen Chassisanschlussteil (7) ausgebildet. Der Trägeransatz (17) hat z.B. eine ebene Plattenform. Andere, z.B. kastenprofilartige Formen sind ebenfalls möglich.

Wie Figur 5 und 6 verdeutlichen, weist der Trägersteg (18) eine geringere Höhe als das Chassisanschlussteil (7) auf. Der Trägeransatz (17) kann eine gleiche oder größere Höhe als das Chassisanschlussteil (7) haben. Das Chassisanschlussteil (7) kann eine plattenförmige oder eine in Figur 5 gezeigte kastenförmige Ausbildung haben.

Der Untergurt (20) des Längsträgers (16) kann unterhalb des Chassisanschlussteils (7) angeordnet sein. Der bevorzugt plattenförmige Trägeransatz (17) liegt z.B. plan an der Außenseite des Chassisanschlussteils (7) an.

Wie Figur 1 verdeutlicht, können sich die Höhenversätze (h1) und (h2) addieren bzw. kumulieren. Die Längsträger (16) mit der besonders niedrigen Trägersteghöhe und der hierauf angeordnete Boden (14) können dadurch weit nach unten tiefer gelegt werden. Durch den Höhenversatz (h2) an den Längsträgern (16) und die Bodenabsenkung kann auch das Dach (13) des Aufbaus (12) in der in Figur 1 angedeuteten Weise abgesenkt werden.

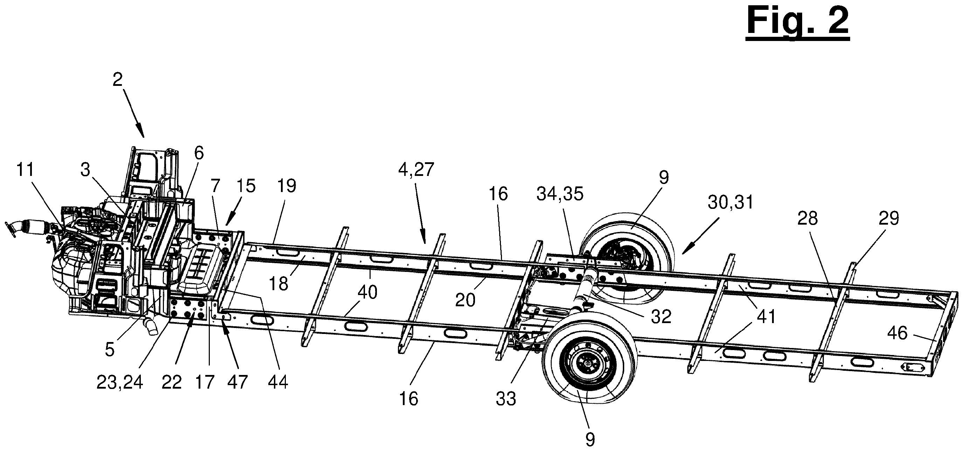

Am Frontbereich der Längsträger (16) und des Anbauchassis (4) kann gemäß Figur 2 bis 4 sowie Figur 9 und 10 eine Quertraverse (44) angeordnet sein. Diese befindet sich z.B. am hinteren Rand der Trägeransätze (17) und ist hier mit den Längsträgern (16) an den Trägeransätzen (17) fest verbunden, insbesondere verschraubt. Die Unterteile (7) bzw. Chassisanschlussteile können entsprechend verkürzt sein. Die Quertraverse (44) kann alternativ zwischen den Unterteilen (7) bzw. Chassisanschlussteilen angeordnet sein.

An der Übergangsstelle zwischen dem hinteren aufrechten Rand des Trägeransatzes (17) und dem Obergurt (19) ist z.B. randseitig eine vertiefte Ausnehmung (43) angeordnet. Diese kann für die Quertraverse (44) vorgesehen sein. Die Ausnehmung (43) kann auch herstellungstechnische, z.B. biegetechnische, Vorteile haben.

Die bevorzugt kastenartig oder stufenartig profilierte Quertraverse (44) kann die Trägeransätze (17) und den Anbindungsbereich der Längsträger (16) am Adapter (5) bzw. am Zugkopfrahmen (3) versteifen. Sie kann die bevorzugt dünnwandigen Trägeransätze (17) in Querrichtung gegenseitig abstützen. An den Längsträgern (16) kann an diesem Anbindungsbereich am Trägersteg (18) und ggf. teilweise auch am Trägeransatz (17) jeweils zusätzlich und z.B. außenseitig oder innen- und außenseitig eine weitere, z.B. plattenartige, axiale Längsversteifung (47) angeordnet sein. Figuren 2 bis 4, 9 und 10 zeigen diese Anordnung. Die Längsversteifung (47) kann die Ausnehmung (43) axial überbrücken und die Übergangsstelle zum Trägeransatz (17) stabilisieren.

In dem Bereich zwischen den frontseitig vorspringenden Trägeransätzen (17) und der Quertraverse (44) kann z.B. die Auspuffanlage untergebracht sein. Für die Ausbildung und Anordnung der Quertraverse (44) gibt es gemäß Figuren 2 bis 4, 9 und 10 unterschiedliche Gestaltungs- und Befestigungsmöglichkeiten.

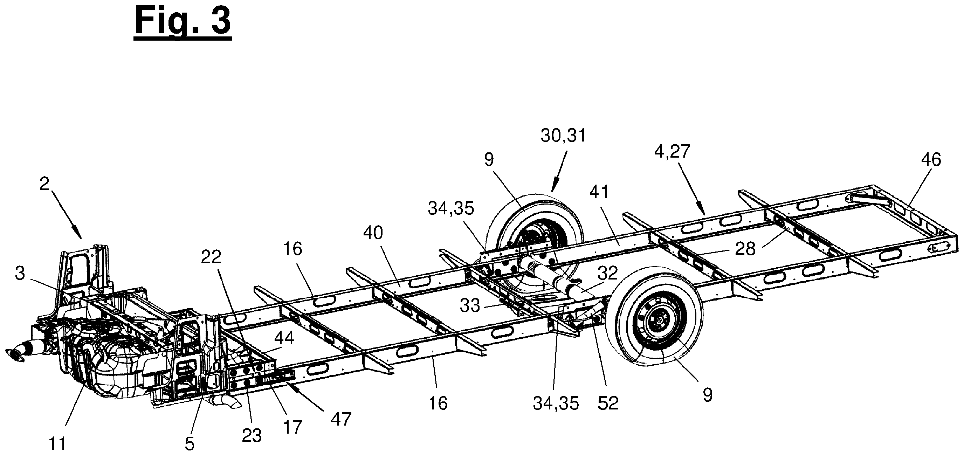

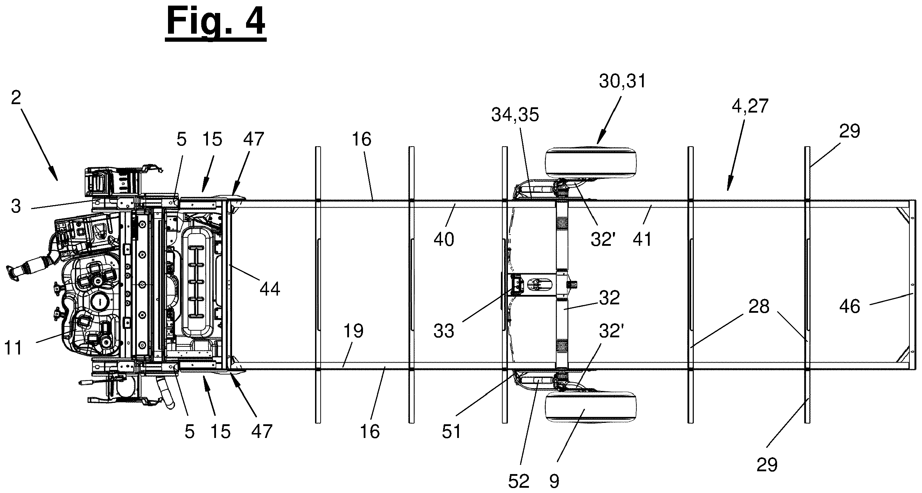

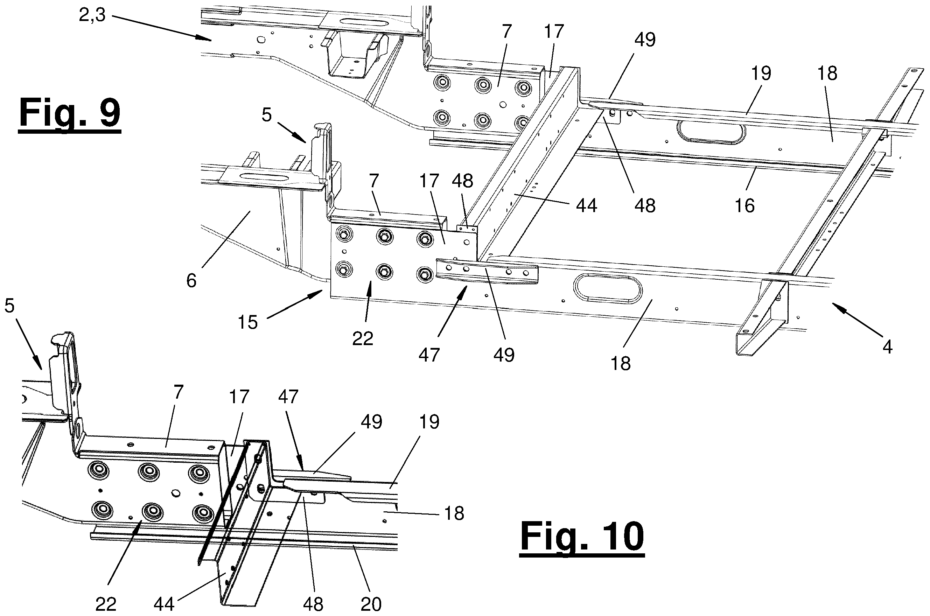

In der Variante von Figur 2 werden die beidseitigen Längsversteifungen (47) von abgewinkelten, z.B. L-förmigen, Stützbügeln gebildet, die jeweils innen- und außenseitig an den Trägeransätzen (17) angeordnet und miteinander sowie mit den Trägeransätzen (17) und der Quertraverse (44) fest verbunden sind. Bei der Ausführung von Figur 3 und 4 ist zusätzlich außen eine axiale Stützspange angeordnet. Figur 9 und 10 verdeutlichen eine solche Ausbildung. An den Enden der in Figur 10 transparent und abgebrochen dargestellten Quertraverse (44) sind z.B. L-förmige flache Stützbügel (48) befestigt, insbesondere angeschweisst. Diese sind durch die jeweiligen Ansätze (17) und Trägerstege (18) jeweils mit einer außenseitigen axialen Stützspange (48) fest verbunden, insbesondere verschraubt.

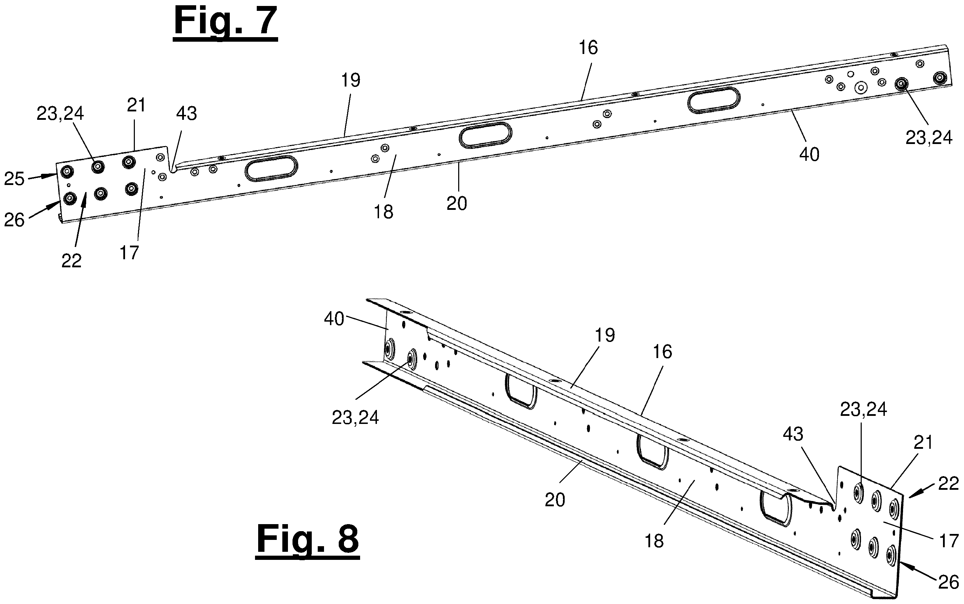

Die Längsträger (16) sind gemäß Figur 3, 4 sowie Figur 11 und 12 in axialer Richtung jeweils in zwei oder mehr Trägerabschnitte (40,41) unterteilt. Diese sind axial hintereinander angeordnet. Eine Trennstelle kann sich an der Achsanordnung (30) befinden. Die Trägerabschnitte (40,41) sind hierbei axial unter Bildung eines Freiraums oder eines Spalts (42) voneinander distanziert. Die Trägerabschnitte (40,41) haben bis auf den Trägeransatz (17) im Wesentlichen die gleiche Querschnittsform und Dimensionierung, insbesondere im Bereich der Trennstelle. Der Trägeransatz (17) ist am vorderen Trägerabschnitt (40) frontseitig angeordnet. Figur 7 und 8 zeigen in perspektivischer Ansicht die Innen- und Außenanseite des vorderen Trägerabschnitts (40).

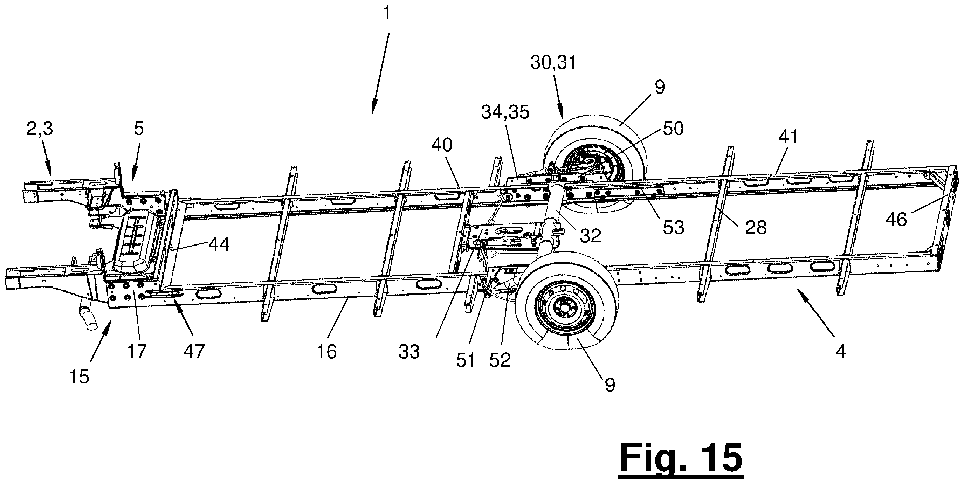

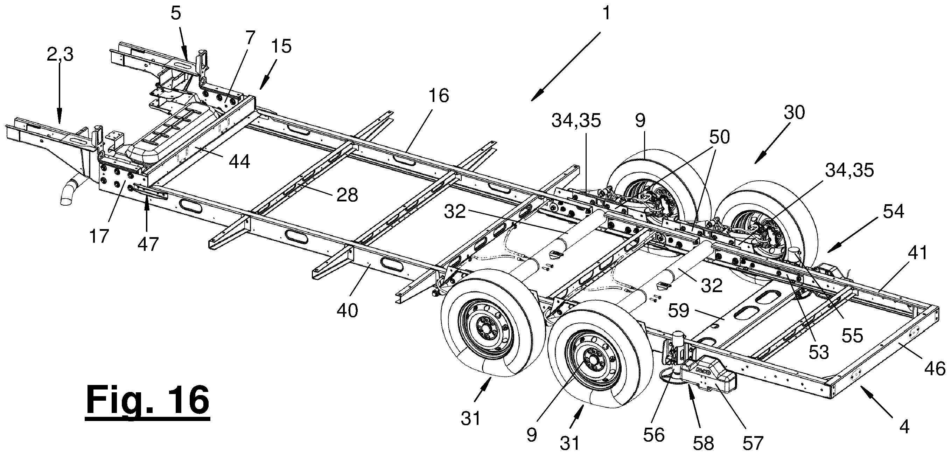

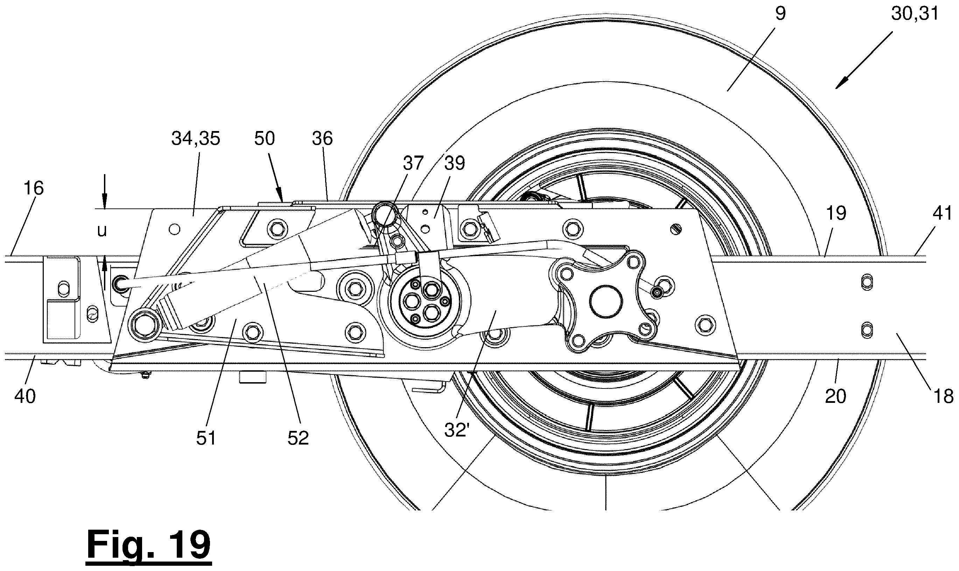

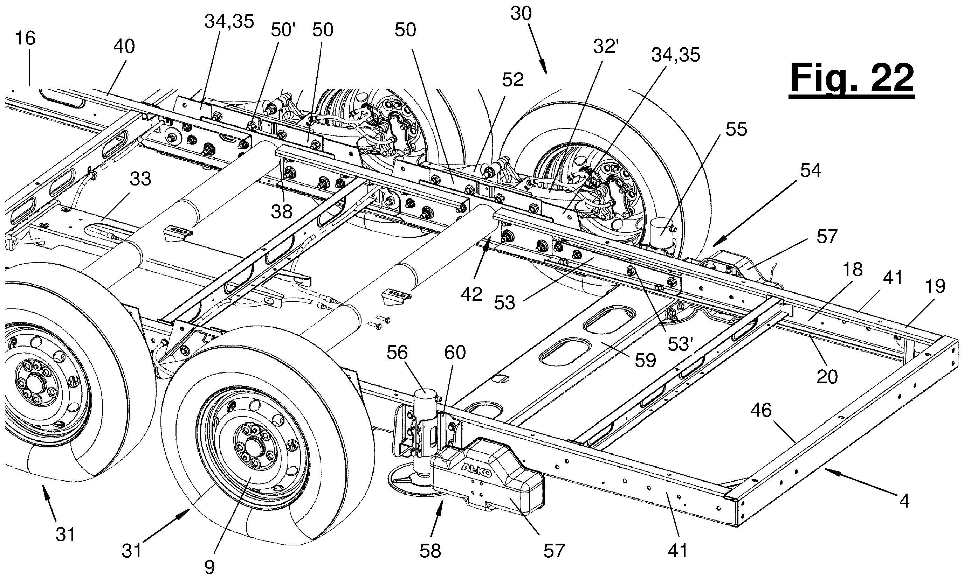

Die heckseitige Achsanordnung (30) kann eine oder mehrere Achsen (31) aufweisen. In den Ausführungsbeispielen von Figur 1 bis 15 und 17 bis 21 ist eine einzelne Achse (31) vorhanden. Alternativ ist z.B. gemäß Figuren 16 und 22 eine Tandem- oder Trippelachse möglich. Die Achse (31) ist als Lenkerachse ausgebildet und weist einen über die Chassisbreite durchgehenden Achskörper (32) mit endseitigen schwenkbar gelagerten Radschwinghebeln (32') auf, an denen die Räder (9) befestigt sind. Der Achskörper (32) kann eine pfeilartig abgewinkelte Erstreckung für eine Schräglenkerachse oder die gezeigte gerade Erstreckung für eine Längslenkerachse haben.

Der Achskörper (32) kann rohrartig ausgebildet sein und kann z.B. die gezeigte zylindrische Form haben. Die Achsanordnung (30) kann ein Feder- und Dämpfmittel aufweisen. Ein Federmittel kann eine Achsfederung und/oder eine externe Federung sein. Die Radschwinghebel (32') können mit im Achsrohr (32) angeordneten Federelementen oder mit externen Federelementen, z.B. Schraubenfedern, Luftfedern oder dgl. verbunden sein. Außerdem können Dämpfmittel (52) in Form von Stoßdämpfern vorhanden sein. Auch der Anbau eines Niveaureglers zum bedarfsweisen Heben und Senken des Anbauchassis (4) ist möglich.

An den Enden des Achskörpers (32) sind Achsböcke (34) angeordnet und befestigt. Diese sind ihrerseits mit den Endbereichen der Trägerabschnitte (40,41) über Befestigungsmittel (23) an den Trägerstegen (18) fest verbunden. Die Achsböcke (34) überbrücken jeweils die Trennstelle bzw. den Spalt (42) auf Höhe der Trägerabschnitte (40,41). Der Achskörper (32) erstreckt sich durch den Spalt (42) zwischen den Trägerabschnitten (40,41).

Die geteilten Längsträger (16), insbesondere die Trägerabschnitte (40,41) haben eine geringe Höhe. Diese kann kleiner als bei üblichen Anbauchassis und Längsträgern sein. Diese Höhe kann im wesentlichen der Höhe oder dem äußeren Durchmesser des Achskörpers (32) entsprechen oder geringfügig größer sein. Die Figuren 2, 11, 12, 17 und 22 verdeutlichen diese Größenverhältnisse.

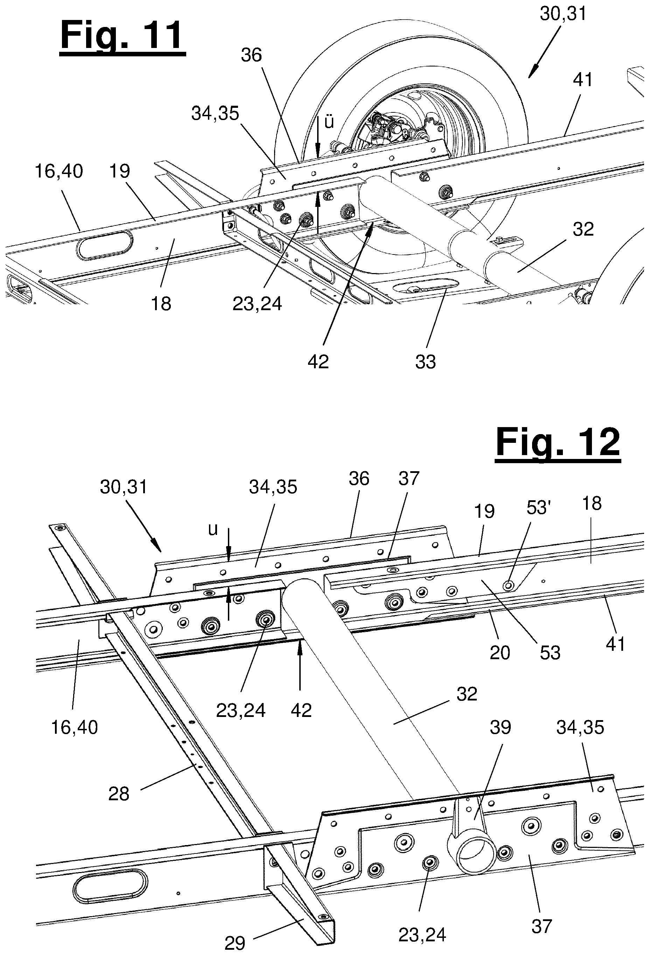

Wie Figuren 11 bis 13 und 17 bis 22 verdeutlichen, kann der Achskörper (32) durch eine Aufnahmeöffnung (38) am Achsbock (34) durchgesteckt und hier auch befestigt sein. Die Aufnahmeöffnung (38) kann eine geschlossene, z.B. kreisförmige, Kontur haben und vom unteren Achsbockrand geringfügig distanziert sein. Zur Abstützung und Befestigung kann z.B. gemäß Figur 12, 17 bis 19 ein Stützansatz (39) außenseitig am Achsbock (34) angeordnet sein, der mit dem Achskörper (32) und dem Achsbock (34) fest verbunden ist, z.B. durch Schweißen. Der Stützansatz (39) hat z.B. eine keilartige Gehäuseform und ist an der Oberseite des Achskörpers (32) angeordnet. Der Stützansatz (39) verjüngt sich nach oben hin und reicht bis zum oberen Achsbockrand, insbesondere zur Oberkante (36). Der Stützansatz (39) verteilt die von der Achse (31) eingeleiteten Kräfte und leitet sie in den oberen Achsbockbereich.

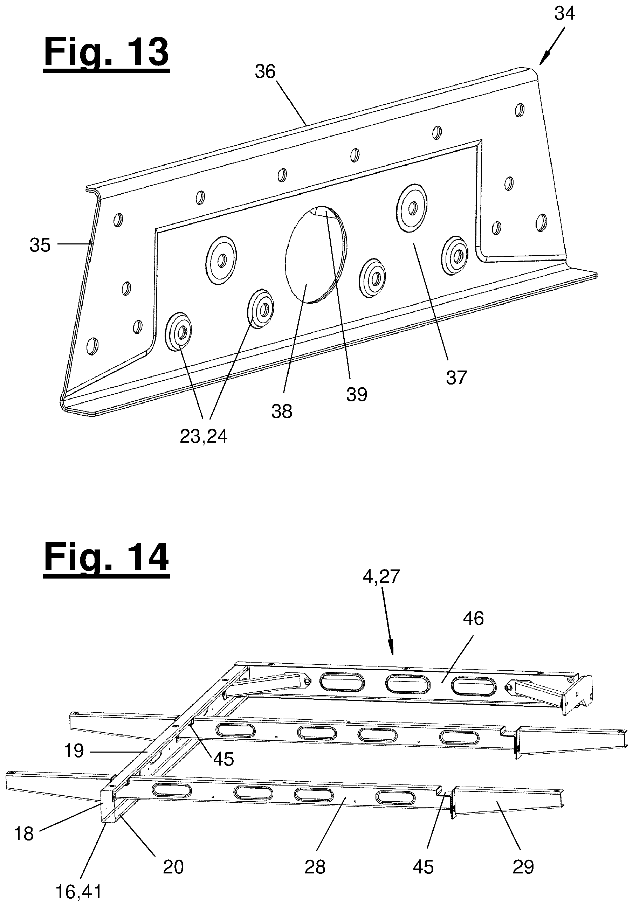

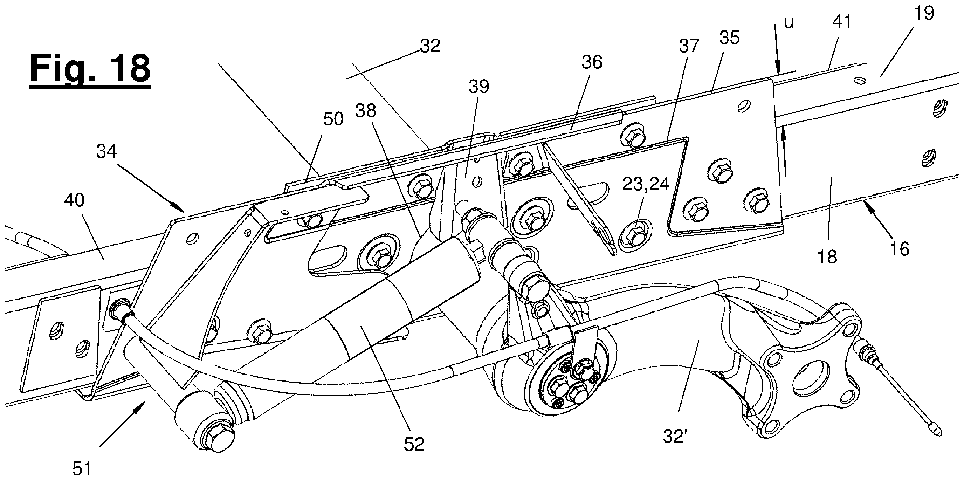

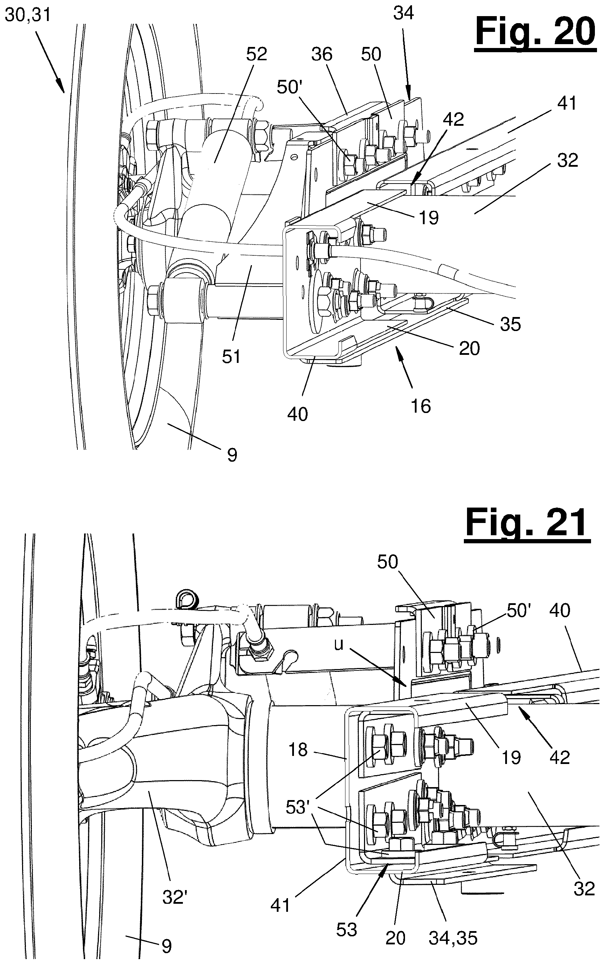

Die Achsböcke (34) weisen jeweils gemäß Figur 13 und 18 ein versteiftes, plattenartiges Tragprofil (35) mit der besagten Aufnahmeöffnung (38) auf. Die Versteifung kann durch randseitige Abkantungen des Tragprofils (35), z.B. durch die in Figur 20 und 21 gezeigte Z-Profilform, gebildet werden. Ferner kann an der aufrechten Wand des Tragprofils (35) eine Prägung (37) vorhanden sein. An diesem Bereich können sich die Befestigungselemente (23) befinden. Der Stützansatz (39) wirkt ebenfalls versteifend.

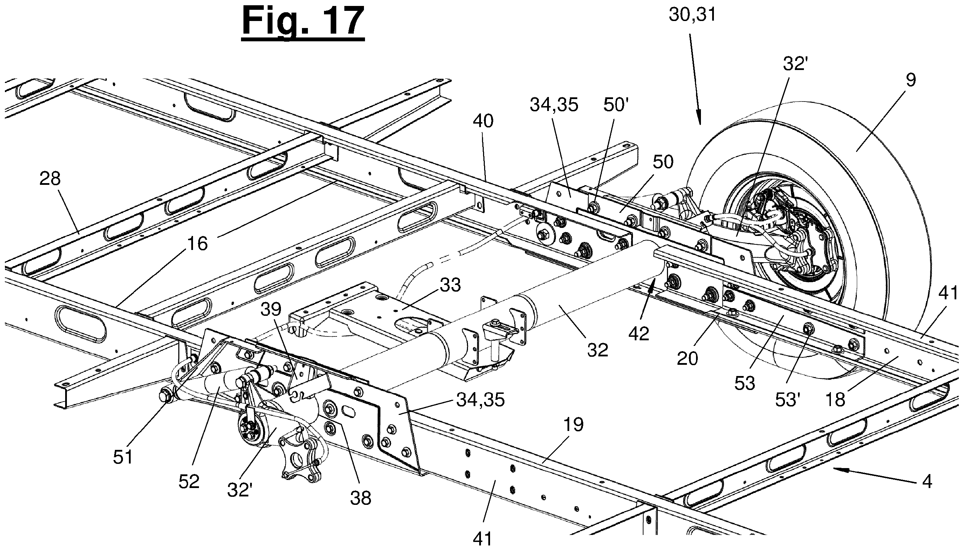

Gemäß Figuren 12, 17, 20, 21 und 22 kann an einem Trägerabschnitt (40,41) im Achsbockbereich innenseitig eine Versteifungseinlage (53) am Trägersteg (18) montiert sein. Die Versteifungseinlage (53) ist mit dem aufrechten Trägersteg (18) des Trägerabschnitts (40,41) und dem außenseitigen Achsbock (34), insbesondere Tragprofil (35), fest verbunden, insbesondere verschraubt. Figur 12 zeigt eine Ausführung als einzelnes Versteifungsblech. In Figur 17, 21 und 22 ist eine Ausführung mit zwei geraden Winkelblechen dargestellt.

Die Längsträger (16) bzw. ihre Trägerabschnitte (40,41) liegen mit ihren Trägerstegen (18) plan an dem außenseitig angeordneten Tragprofil (35) an. Die Untergurte (20) können nahe an einer eventuellen unteren und nach innen gerichteten Abkantung des jeweiligen Tragprofils (35) angeordnet sein.

Die Höhe der Achsböcke (34) bzw. Tragprofile (35) ist größer als die Höhe der Längsträger (16) bzw. ihrer Trägerabschnitte (40,41). Die Oberkante (36) der Tragprofile (35) befindet sich mit einem Abstand oberhalb der Obergurte (19). Hierdurch haben die Achsböcke (34) jeweils einen freien Überstand (u) über den Längsträgern (16) bzw. Trägerabschnitten (40,41).

Am freien Überstand (u) kann gemäß Figur 17 bis 22 bevorzugt innenseitig jeweils ein axiales leistenartiges Versteifungselement (50), z.B. ein Blechstreifen, befestigt, insbesondere angeschraubt sein. Dessen Anordnung kann räumlich auf den Überstand (u) oberhalb des Längsträgers (16) und ggf. auch oberhalb der Prägung (37) begrenzt sein. Es kann in Axialrichtung (8) des Anbauchassis (4) zentral angeordnet sein. Zudem kann im mittleren Bereich und gegenüber dem Stützansatz (39) eine versteifende Ausbuchtung am Versteifungselement (50) angeordnet sein.

Die Befestigungsmittel (23) an den Anbaustellen (15) und an der Achsanordnung (30) können gleichartig ausgebildet sein. Bevorzugt wird eine lösbare Befestigung mit Ausbildung der Befestigungsmittel (23) als Schraubverbindungen. In den Zeichnungen ist eine besonders stabile Ausbildung als Napfverschraubung (24) gezeigt. Hierbei sind die Durchgangsbohrungen für das Schraubmittel jeweils von einer Prägung der randseitigen Wandung umgeben. Die Prägungen an den zu verbindenden Teilen liegen formschlüssig in und aneinander, wobei sie sich gegenseitig quer zur Schraubrichtung abstützen und durch die Verschraubung zusammengespannt werden.

Die Achsböcke (34) können vorbereitete Montagestellen für Dämpfmittel (52) und/oder Federmittel aufweisen. Diese können bedarfsweise später angebaut oder ausgetauscht werden. Die Montagestellen können z.B. als die gezeigten Öffnungen oder als abstehende Bolzen am Tragprofil (35) ausgebildet und angeordnet sein. Bolzen haben Vorteile, wenn im Aufbau (12) ein Radgehäuse im engen Anschluss an den Achsbock (34) angeordnet wird.

Figur 17 bis 19 zeigen in perspektivischer Ansicht und Seitenansicht beispielhaft eine Montagestelle mit einem Anbaubeschlag (51) für ein Dämpfmittel (52) bzw. Stoßdämpfer. Der Anbaubeschlag (51) ist z.B. als an der aufrechten Wand des Tragprofils (35) anliegende Montageplatte mit versteifenden, abgewinkelten Randflanschen und einem abstehenden Tragbolzen für das Auge des Dämpfmittels (52) ausgebildet. Der Anbaubeschlag (51) reicht in der Höhe über den größten Teil des Tragprofils (35) bis in den Überstand (u) und kann auch eine an die Prägung (37) angepasste Prägeverformung aufweisen. Die in der Seitenansicht z.B. V-förmige Montageplatte ist mit dem versteiften Tragprofil (35), dem aufrechten Trägersteg (18) und dem Versteifungselement (50) fest verbunden, insbesondere verschraubt.

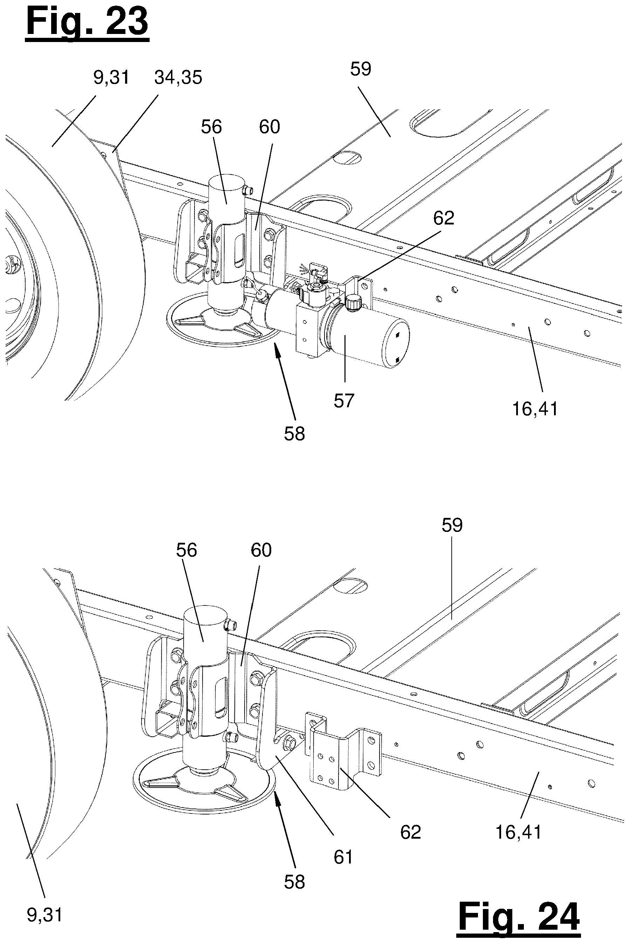

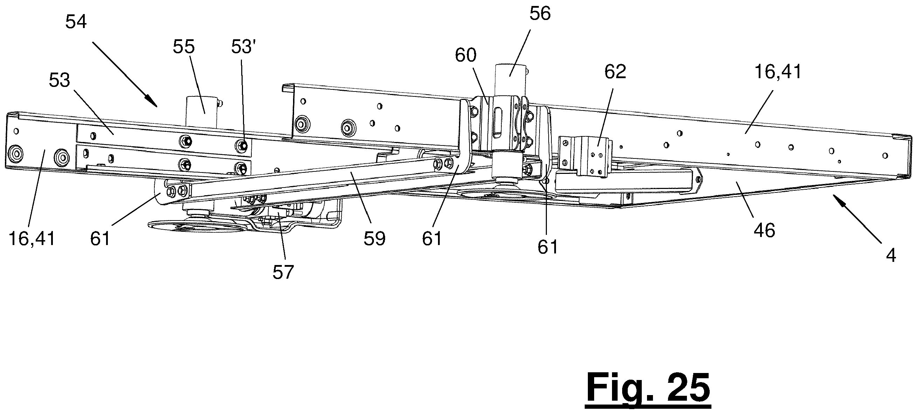

Am Anbauchassis (4) kann eine Hubstützenanordnung (54) angeordnet sein, bevorzugt im Bereich der Achsanordnung (30). Figur 22 bis 25 zeigen diese beispielhaft an einem Anbauchassis (4) mit einer Tandemachse. Die gezeigte Hubstützenanordnung (54) kann auch bei einem Anbauchassis (4) mit einer anderen Achsanordnung (30), insbesondere mit einer einzelnen Achse (31), einer Trippelachse oder dgl., eingesetzt werden. Die Hubstützenanordnung (54) kann am Anbauchassis (4) bauseits montiert sein oder kann an einem vorhandenen Anbauchassis (4) nachgerüstet oder umgerüstet werden.

Die Hubstützenanordnung (54) ist z.B. im hinteren Bereich des Anbauchassis (4) hinter der Achsanordnung (30) platziert. Alternativ ist eine andere Platzierung möglich. Bevorzugt wird eine Platzierung im Bereich vor und/oder hinter der Achsanordnung (30) und mit geringem Abstand zu dieser. Günstig ist eine Anordnung im Bereich einer Versteifungseinlage (53).

Die Hubstützenanordnung umfasst beidseitige Hubstützen (55,56) und einen Montagebeschlag (58) zur Befestigung der Hubstützen (55,56) an den Längsträgern (16), insbesondere an den vorderen und/oder hinteren Trägerabschnitten (40,41). Der Montagebeschlag (58) kann auch mit einer innenseitigen Versteifungseinlage (53) am jeweiligen Längsträger (16) oder Trägerabschnitt (40,41) fest verbunden, insbesondere verschraubt werden.

Die Hubstützen (55,56) sind in der gezeigten Ausführungsform als hydraulische Hubstützen ausgebildet. Diese können einen bevorzugt aufrecht und stationär am Anbauchassis (4) montierten Zylinder mit einer ausfahrbaren Kolbenstange und einem Stützfuß oder Stützteller am freien Kolbenstangenende umfassen. In einer anderen und nicht dargestellten Ausführungsform können die Hubstützen (55,56) in anderer Weise ausgebildet sein, z.B. als mechanische Hubstützen mit einem Spindeltrieb, Zahnstangentrieb oder dgl.. Die Hubstützen (55,56) können auch schwenkbar über den Montagebeschlag (58) am Anbauchassis (4) gelagert sein.

Bei einer hydraulischen Hubstützenausbildung können ein oder mehrere hydraulische Versorgungseinheiten (57) vorhanden sein. In der gezeigten Ausführungsform sind dezentrale Hubstützen (55,56) mit jeweils einer eigenen hydraulischen Versorgungseinheit (57) vorhanden. In einer anderen Ausführungsform können die beidseitigen bzw. paarweisen Hubstützen (55,56) eine gemeinsame hydraulische Versorgungseinheit (57) aufweisen. Die ein oder mehreren hydraulischen Versorgungseinheiten (57) umfassen eine Pumpenanordnung, ein Hydraulikreservoir und steuerbare Ventile, z.B. Proportionalventile.

Die Hubstützen (55,56) können einzeln oder gemeinsam mit der oder den betreffenden hydraulischen Versorgungseinheiten (57) in einem hydraulischen Kreis durch Leitungen verbunden sein. Die Zylinder können im oberen und unteren Bereich Leitungsanschlüsse aufweisen, die zu den betreffenden Zylinderkammern oberhalb und unterhalb des Kolbens führen. Die Hubstützenanordnung (54) kann ferner eine nicht dargestellte Steuerung aufweisen, die mit einer Stromversorgung für die ein oder mehreren hydraulischen Versorgungseinheiten (57), insbesondere mit einer Leistungsendstufe, und ggf. mit einer Nivelliereinrichtung ausgestattet sein kann.

Der Montagebeschlag (58) umfasst für jede der einander gegenüberliegenden Hubstützen (55,56) einen Hubstützenhalter (60), der außenseitig am betreffenden Längsträger (16) bzw. Trägerabschnitt (40,41), insbesondere an dessen aufrechtem Trägersteg (18), befestigt werden kann, z.B. durch Schrauben. Der Montagebeschlag (58) umfasst ferner eine Querstütze (59), die mit den beidseitigen Hubstützenhaltern (60) verbunden sein kann. Zudem kann der Montagebeschlag (58) eine Stützkonsole (62) für eine hydraulische Versorgungseinheit (57) beinhalten.

Der Hubstützenhalter (60) weist eine Montageplatte zur Anlage und Befestigung, insbesondere Schraubbefestigung, am betreffenden Längsträger (16) bzw. Trägerabschnitt (40,41) auf. Der aufrechte Trägersteg (18) kann zwischen der Montageplatte und einer Versteifungseinlage (53) eingespannt und stabilisiert ein.

Die Montageplatte weist außenseitig eine Spange, Klemmschelle oder ein anderes adaptiertes Befestigungsmittel für die jeweilige Hubstütze (55,56) auf. Der Hubstützenhalter (60) weist randseitig von der Montageplatte nach unten abstehende und unter dem betreffenden Längsträger (16) zum Chassisinnenraum abgewinkelte Stützarme (61) auf. Die Stützarme (61) können an die Montageplatte angeformt sein. Sie können z.B. von abgewinkelten Randflanschen an den aufrechten Rändern der Montageplatte gebildet werden. An den horizontalen Armbereichen der Stützarme (61) ist die Querstütze (59) befestigt, insbesondere verschraubt.

Die Querstütze (59) kann im Querschnitt profiliert, z.B. als liegendes U- oder C-Profil ausgebildet sein. Die horizontalen Armbereichen der Stützarme (61) liegen außenseitig an den beidseitigen Wangen der Querstütze (59) an. Die gezeigte Querstütze (59) ist einteilig ausgebildet, wobei auch eine mehrteilige, insbesondere längenveränderliche, Ausführung möglich ist.

Die Querstütze (59) ist direkt zwischen den einander gegenüberliegenden Hubstützen (55,56) angeordnet. Die Querstütze (59) stabilisiert die Hubstützen (55,56) und versteift in Querrichtung das Anbauchassis.

Bei den gezeigten dezentralen Versorgungseinheiten (57) ist an jedem Längsträger (16) jeweils eine Stützkonsole (62) außenseitig befestigt, insbesondere angeschraubt. Eine gemeinsame Versorgungseinheit (57) kann auch an anderer Stelle, z.B. an oder auf der Querstütze (59) angeordnet und befestigt sein.

Die Hubstützenanordnung (54) kann um weitere und nicht dargestellte Hubstützen ergänzt werden. Diese können z.B. im Bereich des Zugkopfes (2), insbesondere am Zugkopfrahmen (3), montiert sein. Diese ebenfalls paarweise und beidseitig angeordneten weiteren Hubstützen können jeweils eine eigene oder eine gemeinsame hydraulische Versorgungseinheit (57) haben. In einer weiteren Ausgestaltung kann für alle vorhandenen hydraulischen Hubstützen eine gemeinsame hydraulische Versorgungseinheit mit entsprechenden Leitungsverbindungen vorhanden sein. Bei einer anderen und insbesondere mechanischen Ausgestaltung der Hubstützen können die ein oder mehreren Versorgungseinheiten (57) entfallen.

Das Anbauchassis (4) mit den Längsträgern (16) und ggf. den Querträgern (28) und/oder den Seitenauslegern (29) hat eine bevorzugt ebene Oberfläche für die plane Auflage des Bodens (14). Die Obergurte (19) der Längsträger (16) und die Oberseiten der Querträger (28) und/oder Seitenausleger (29) sind auf gleicher Höhe angeordnet. Figur 14 verdeutlicht diese Auslegung. Die Querträger (28) können an den Enden und den stirnseitigen Befestigungsstellen an den Trägerstegen (18) eine Ausklinkung (45) an der Oberseite aufweisen. Das Anbauchassis (4) kann am Heck eine weitere Quertraverse (46) aufweisen, die in der Höhe ebenfalls bündig an die Obergurte (19) anschließt.

Die vorderen und/oder hinteren Rahmenteile des Anbauchassis (4) bzw. Leiterrahmen (27) können vormontiert vom Chassishersteller an einen Fahrzeughersteller geliefert werden. Sie können dort durch wenige Schraubverbindungen zusammengebaut und montiert werden. Eines der Rahmenteile bzw. dessen Trägerabschnitte (40,41) können ggf. bereits mit dem Achsbock (34) verschraubt werden. Dies ist z.B. mit je einer einzelnen Schraubverbindung möglich, die ein Ein- und Ausklappen des Lagerbocks ermöglicht und auf Kundenseite die Ergonomie verbessert.

Abwandlungen der gezeigten Ausführungsbeispiele sind in verschiedener Weise möglich.

Der Adapter (5) kann entfallen oder kann ohne Höhenversatz (h1) ausgebildet sein. Die Längsträger (16) und ihre Trägerabschnitte (40,41) können eine andere profilierte Querschnittsform aufweisen. Die Achsanordnung (30) kann Halbachsen oder Stummelachsen mit einem einzeln und einseitig an einem verkürzten Achskörper (32) angeordneten Radschwinghebel (32') und Achsbock (34) aufweisen. Das Fahrzeug (1) kann einen Heckantrieb und eine andere angetriebene Achsanordnung (30) haben.

Die Merkmale der gezeigten Ausführungsbeispiele und der genannten Abwandlungen können im Rahmen der Ansprüche in beliebig geeigneter Weise kombiniert und ggf. vertauscht werden.

### BEZUGSZEICHENLISTE

- 1: Fahrzeug, Straßenfahrzeug
- 2: Zugkopf, Triebkopf
- 3: Zugkopfrahmen
- 4: Anbauchassis
- 5: Adapter
- 6: Oberteil, Rahmenanschlussteil
- 7: Unterteil, Chassisanschlussteil
- 8: Fahrtrichtung
- 9: Fahrzeugrad
- 10: Kabine
- 11: Triebblock
- 12: Aufbau
- 13: Dach
- 14: Boden
- 15: Anbaustelle
- 16: Längsträger
- 17: Trägeransatz
- 18: Trägersteg
- 19: Obergurt
- 20: Untergurt
- 21: Oberkante
- 22: Befestigungsanordnung
- 23: Befestigungsmittel
- 24: Napfverschraubung
- 25: Befestigungsreihe
- 26: Befestigungsreihe
- 27: Leiterahmen
- 28: Querträger
- 29: Seitenausleger
- 30: Achsanordnung
- 31: Achse, Lenkerachse
- 32: Achskörper
- 32': Radschwinghebel
- 33: Bremseinrichtung
- 34: Achsbock
- 35: Tragprofil
- 36: Oberkante
- 37: Prägung
- 38: Aufnahmeöffnung
- 39: Stützansatz
- 40: Trägerabschnitt
- 41: Trägerabschnitt
- 42: Freiraum, Spalt
- 43: Ausnehmung
- 44: Quertraverse
- 45: Ausklinkung
- 46: Hecktraverse
- 47: Längsversteifung
- 48: Stützbügel
- 49: Stützspange
- 50: Versteifungselement
- 50': Schraubmutter
- 51: Anbaubeschlag
- 52: Dämpfmittel
- 53: Versteifungseinlage
- 53': Schraubmutter
- 54: Hubstützenanordnung
- 55: Hubstütze
- 56: Hubstütze
- 57: Versorgungseinheit
- 58: Montagebeschlag
- 59: Querstütze
- 60: Hubstützenhalter
- 61: Stützarm
- 62: Stützkonsole

- h1: Höhenversatz Adapter
- h2: Höhenversatz Längsträger
- u: aufrechter Überstand

## Patentansprüche

1. Anbauchassis zur Verbindung mit einem motorisierten, vorzugsweise frontgetriebenen, Zugkopf (2) an einer Anbaustelle (15), wobei das Anbauchassis (4) mehrere, insbesondere zwei, parallele, profilierte, bevorzugt metallische Längsträger (16) mit jeweils einem aufrechten Trägersteg (18) und einem Obergurt (19) sowie mit einer frontseitigen Befestigungsanordnung (22) zur Verbindung mit dem Zugkopf (2) an der Anbaustelle (15) aufweist, **dadurch gekennzeichnet, dass** die Längsträger (16) jeweils frontseitig einen in Trägerlängsrichtung erstreckten und quer zur Trägerlängsrichtung und nach oben abstehenden Trägeransatz (17) aufweisen, dessen Oberkante (21) mit Abstand oberhalb des Obergurts (19) angeordnet ist, wobei die Befestigungsanordnung (22) am Trägeransatz (17) angeordnet ist.

2. Anbauchassis nach Anspruch 1, **dadurch gekennzeichnet, dass** die Längsträger (16) jeweils eine seitlich offene Querschnittsform haben.

3. Anbauchassis nach Anspruch 1 oder 2, **dadurch gekennzeichnet, dass** die Befestigungsmittel als Schraubverbindungen, insbesondere als formschlüssige Napfverschraubungen (24), ausgebildet sind.

4. Anbauchassis nach Anspruch 1, 2 oder 3, **dadurch gekennzeichnet, dass** der Trägeransatz (17) plattenförmig ausgebildet und an den Trägersteg (18) angeformt oder angesetzt ist.

5. Anbauchassis nach einem der vorhergehenden Ansprüche, **dadurch gekennzeichnet, dass** die Befestigungsanordnung (22) mehrere am Trägeransatz (17) angeordnete Befestigungsmittel (23) aufweist, wobei zumindest ein Befestigungsmittel (23), insbesondere eine Befestigungsreihe (25), oberhalb des Obergurts (19) angeordnet ist.

6. Anbauchassis nach einem der vorhergehenden Ansprüche, **dadurch gekennzeichnet, dass** der Trägeransatz (17) zur Anlage und Verbindung mit einem Rahmenteil eines Zugkopfrahmens (3) oder zur Anlage und Verbindung mit einem am Zugkopf (2) angeordneten Adapter (5) ausgebildet ist, wobei der Adapter (5) einen Höhenversatz (h1) zwischen einem zugkopfseitigen Rahmenanschlussteil (6) und einem Chassisanschlussteil (7) aufweist.

7. Anbauchassis nach Anspruch 6, **dadurch gekennzeichnet, dass** zwischen der Oberkante (21) des Trägeransatz (17) und dem Obergurt (19) ein Höhenversatz (h2) ausgebildet ist und der Trägersteg (18) eine geringere Höhe als das Rahmenteil eines Zugkopfrahmens oder eine geringere Höhe als das Chassisanschlussteil (7) des Adapter (5) aufweist, wobei das Anbauchassis (4) um einen kumulierten Höhenversatz (h1,h2) tiefer als der Zugkopfrahmen (3) angeordnet ist.

8. Anbauchassis nach einem der vorhergehenden Ansprüche, **dadurch gekennzeichnet, dass** zwischen den Trägeransätzen (17) der parallelen Längsträger (16) eine Quertraverse (44) angeordnet ist.

9. Anbauchassis nach einem der vorhergehenden Ansprüche, **dadurch gekennzeichnet, dass** das Anbauchassis (4) eine heckseitige Achsanordnung (30) aufweist, die eine oder mehrere gefederte Achsen (31), insbesondere Lenkerachsen, und Achsböcke (34) umfasst.

10. Anbauchassis nach Anspruch 9, **dadurch gekennzeichnet, dass** die Achsböcke (34) eine größere Höhe als die Längsträger (16) haben und über deren Obergurt (19) mit einem Überstand (u) nach oben ragen.

11. Anbauchassis nach Anspruch 9 oder 10, **dadurch gekennzeichnet, dass** die Achsböcke (34) jeweils ein versteiftes plattenartiges Tragprofil (35) mit einer bevorzugt umfangseitig geschlossenen Aufnahmeöffnung (38) und einem dortigen hochstehenden Stützansatz (39) für einen Achskörper (32) aufweisen.

12. Anbauchassis nach einem der Ansprüche 9 bis 11, **dadurch gekennzeichnet, dass** die Längsträger (16) jeweils an der Achsanordnung (30) in der Länge in zwei oder mehr Trägerabschnitte (40,41) unterteilt sind, wobei die Trägerabschnitte (40,41) jeweils an der Achsanordnung (30), insbesondere an deren Achsböcken (34), befestigbar oder befestigt sind.

13. Anbauchassis nach Anspruch 12, **dadurch gekennzeichnet, dass** die Trägerabschnitte (40,41) der Längsträger (16) jeweils an einem Achskörper (32) der Achsanordnung (30) axial unter Bildung eines Spalts (42) voneinander distanziert sind, wobei der Achskörper (32) im Spalt (42) zwischen den Trägerabschnitten (40,41) angeordnet ist und der Achsbock (34) den Spalt (42) auf Höhe der Trägerabschnitte (40,41) überbrückt.

14. Anbauchassis nach einem der Ansprüche 9 bis 13,
**dadurch gekennzeichnet, dass** am Überstand (u) der Achsböcke (34) eine Versteifungsleiste (50) angeordnet ist und/oder innenseitig an den hinteren Trägerabschnitten (41) eine Versteifungseinlage (53) angeordnet ist, die mit dem jeweiligen Achsbock (34) und dem Trägerabschnitt (41) fest verbunden, insbesondere verschraubt ist.

15. Anbauchassis nach einem der Ansprüche 9 bis 14,
**dadurch gekennzeichnet, dass** an den Längsträgern (16) im Bereich der heckseitigen Achsanordnung (30) eine Hubstützenanordnung (54) mit beidseitigen Hubstützen (55,56) mittels eines Montagebeschlags (58) montierbar oder montiert ist, wobei der Montagebeschlag (58) Hubstützenhalter (60) zur Montage am jeweiligen Längsträger (16) und eine verbindende Querstütze (59) aufweist.

16. Fahrzeug, insbesondere Straßenfahrzeug, mit einem motorisierten, vorzugsweise frontgetriebenen Zugkopf (2) und mit einem Anbauchassis (4) sowie ggf. einem Adapter (5), die an einer Anbaustelle (15) miteinander verbunden sind, **dadurch gekennzeichnet, dass** das Anbauchassis (4) nach mindestens einem der Ansprüche 1 bis 15 ausgebildet ist.

17. Fahrzeug nach Anspruch 15, **dadurch gekennzeichnet, dass** das Fahrzeug (1) einen auf dem Anbauchassis (4) angeordneten Aufbau (12) mit einem Boden (14) aufweist, der auf dem Anbauchassis (4) und den Längsträgern (16) aufliegt und abgestützt ist.

## Claims

1. Attachable chassis for connection to a motorized, preferably front-wheel-drive, tractor head (2) at an attachment point (15), wherein the attachable chassis (4) has multiple, in particular two, parallel profiled, preferably metallic longitudinal members (16), with in each case an upright member web (18) and a top chord (19) and also with a frontside fastening arrangement (22) for connection to the tractor head (2) at the attachment point (15), **characterized in that** the longitudinal members (16) have, in each case at the front side, a member extension (17) which extends in the member longitudinal direction and which projects transversely to the member longitudinal direction and upwards and whose top edge (21) is arranged at a distance above the top chord (19), wherein the fastening arrangement (22) is arranged on the member extension (17).

2. Attachable chassis according to Claim 1, **characterized in that** the longitudinal members (16) each have a laterally open cross-sectional shape.

3. Attachable chassis according to Claim 1 or 2, **characterized in that** the fastening means are in the form of screw connections, in particular in the form of form-fitting cupped screw connections (24).

4. Attachable chassis according to Claim 1, 2 or 3, **characterized in that** the member extension (17) is of plate-shaped form and is moulded onto or joined to the member web (18).

5. Attachable chassis according to one of the preceding claims, **characterized in that** the fastening arrangement (22) has multiple fastening means (23) that are arranged on the member extension (17), wherein at least one fastening means (23), in particular one fastening row (25), is arranged above the top chord (19).

6. Attachable chassis according to one of the preceding claims, **characterized in that** the member extension (17) is configured for abutment with and connection to a frame part of a tractor-head frame (3) or for abutment with and connection to an adaptor (5) that is arranged on the tractor head (2), wherein the adaptor (5) has a height offset (h1) between a tractor-head side frame connection part (6) and a chassis connection part (7).

7. Attachable chassis according to Claim 6, **characterized in that** a height offset (h2) is formed between the top edge (21) of the member extension (17) and the top chord (19), and the member web (18) has a smaller height than the frame part of a tractor-head frame or has a smaller height than the chassis connection part (7) of the adaptor (5), wherein the attachable chassis (4) is arranged so as to be lower than the tractor-head frame (3) by a cumulative height offset (h1, h2).

8. Attachable chassis according to one of the preceding claims, **characterized in that** a crossmember (44) is arranged between the member extensions (17) of the parallel longitudinal members (16).

9. Attachable chassis according to one of the preceding claims, **characterized in that** the attachable chassis (4) has a rear-side axle arrangement (30) which comprises one or more spring-mounted axles (31), in particular link axles, and axle blocks (34).

10. Attachable chassis according to Claim 9, **characterized in that** the axle blocks (34) have a greater height than the longitudinal members (16) and project upwards beyond the top chord (19) thereof with a projection (u).

11. Attachable chassis according to Claim 9 or 10, **characterized in that** the axle blocks (34) each have a reinforced, plate-like bearing profile (35) with a preferably circumferentially closed receiving opening (38) and with an upright support extension (39) at said receiving opening for an axle body (32) .

12. Attachable chassis according to one of Claims 9 to 11, **characterized in that** the longitudinal members (16), in each case at the axle arrangement (30), are subdivided in length into two or more member sections (40, 41), wherein the member sections (40, 41) are fastenable or fastened in each case to the axle arrangement (30), in particular to the axle blocks (34) thereof.

13. Attachable chassis according to Claim 12, **characterized in that** the member sections (40, 41) of the longitudinal members (16) are at an axial distance from one another, so as to form a gap (42), in each case at an axle body (32) of the axle arrangement (30), wherein the axle body (32) is arranged in the gap (42) between the member sections (40, 41) and the axle block (34) bridges the gap (42) at the height of the member sections (40, 41).

14. Attachable chassis according to one of Claims 9 to 13, **characterized in that** a reinforcing strip (50) is arranged at the projection (u) of the axle blocks (34), and/or a reinforcing insert (53) is arranged at the inside on the rear member sections (41) and is fixedly connected, in particular screwed, to the respective axle block (34) and the member section (41) .

15. Attachable chassis according to one of Claims 9 to 14, **characterized in that** a lifting-support arrangement (54) with lifting supports (55, 56) on both sides is mountable or mounted by means of a mounting fitting (58) on the longitudinal members (16) in the region of the rear-side axle arrangement (30), wherein the mounting fitting (58) has lifting-support holders (60) for mounting on the respective longitudinal member (16) and gas a connecting transverse support (59).

16. Vehicle, in particular road vehicle, having a motorized, preferably front-wheel-drive, tractor head (2) and having an attachable chassis (4) and possibly an adaptor (5), which are connected to one another at an attachment point (15), **characterized in that** the attachable chassis (4) is designed according to at least one of Claims 1 to 15.

17. Vehicle according to Claim 15, **characterized in that** the vehicle (1) has a body (12), arranged on the attachable chassis (4), with a base (14) which abuts on and is supported on the attachable chassis (4) and the longitudinal members (16).

## Revendications

1. Châssis de montage pour la liaison à une tête de traction (2) motorisée, de préférence entraînée par l'avant, au niveau d'un site de montage (15), le châssis de montage (4) présentant plusieurs, notamment deux, longerons (16) parallèles, profilés, de préférence métalliques, avec respectivement une entretoise de longeron verticale (18) et une semelle supérieure (19), ainsi qu'avec un agencement de fixation côté avant (22) pour la liaison à la tête de traction (2) au niveau du site de montage (15), **caractérisé en ce que** les longerons (16) présentent respectivement côté avant un appendice de longeron (17) s'étendant dans la direction longitudinale du longeron et faisant saillie transversalement à la direction longitudinale du longeron et vers le haut, dont le bord supérieur (21) est agencé à distance au-dessus de la semelle supérieure (19), l'agencement de fixation (22) étant agencé sur l'appendice de longeron (17).

2. Châssis de montage selon la revendication 1, **caractérisé en ce que** les longerons (16) ont respectivement une forme de section transversale ouverte latéralement.

3. Châssis de montage selon la revendication 1 ou 2, **caractérisé en ce que** les moyens de fixation sont réalisés sous forme de liaisons vissées, notamment sous forme de raccords vissés à godet à engagement positif (24) .

4. Châssis de montage selon la revendication 1, 2 ou 3, **caractérisé en ce que** l'appendice de longeron (17) est réalisé sous forme de plaque et est formé ou rapporté à l'entretoise de longeron (18).

5. Châssis de montage selon l'une quelconque des revendications précédentes, **caractérisé en ce que** l'agencement de fixation (22) présente plusieurs moyens de fixation (23) agencés sur l'appendice de longeron (17), au moins un moyen de fixation (23), notamment une rangée de fixation (25), étant agencé au-dessus de la semelle supérieure (19).

6. Châssis de montage selon l'une quelconque des revendications précédentes, **caractérisé en ce que** l'appendice de longeron (17) est réalisé pour l'appui et la liaison avec une partie de cadre d'un cadre de tête de traction (3) ou pour l'appui et la liaison avec un adaptateur (5) agencé sur la tête de traction (2), l'adaptateur (5) présentant un décalage en hauteur (h1) entre une partie de raccordement de cadre (6) côté tête de traction et une partie de raccordement de châssis (7).

7. Châssis de montage selon la revendication 6, **caractérisé en ce qu'**un décalage en hauteur (h2) est réalisé entre le bord supérieur (21) de l'appendice de longeron (17) et la semelle supérieure (19) et l'entretoise de longeron (18) présente une hauteur inférieure à la partie de cadre d'un cadre de tête de traction ou une hauteur inférieure à la partie de raccordement de châssis (7) de l'adaptateur (5), le châssis de montage (4) étant agencé plus bas que le cadre de tête de traction (3) d'un décalage en hauteur cumulé (h1, h2).

8. Châssis de montage selon l'une quelconque des revendications précédentes, **caractérisé en ce qu'**une traverse (44) est agencée entre les appendices de longeron (17) des longerons parallèles (16).

9. Châssis de montage selon l'une quelconque des revendications précédentes, **caractérisé en ce que** le châssis de montage (4) présente un agencement d'essieux côté arrière (30), qui comprend un ou plusieurs essieux à suspension (31), notamment essieux à bras, et des supports d'essieux (34).

10. Châssis de montage selon la revendication 9, **caractérisé en ce que** les supports d'essieux (34) ont une hauteur supérieure à celle des longerons (16) et dépassent vers le haut au-dessus de leur semelle supérieure (19) avec un dépassement (u).

11. Châssis de montage selon la revendication 9 ou 10, **caractérisé en ce que** les supports d'essieux (34) présentent respectivement un profilé porteur (35) renforcé en forme de plaque avec une ouverture de réception (38) de préférence fermée sur le pourtour et un appendice de soutien (39) qui s'y dresse pour un corps d'essieu (32).

12. Châssis de montage selon l'une quelconque des revendications 9 à 11, **caractérisé en ce que** les longerons (16) sont respectivement subdivisés en deux sections de longeron ou plus (40, 41) dans la longueur sur l'agencement d'essieux (30), les sections de longeron (40, 41) pouvant être fixées ou étant fixées respectivement à l'agencement d'essieux (30), notamment à ses supports d'essieux (34).

13. Châssis de montage selon la revendication 12, **caractérisé en ce que** les sections de longeron (40, 41) des longerons (16) sont espacées axialement les unes des autres sur un corps d'essieu (32) de l'agencement d'essieux (30) en formant un espace (42), le corps d'essieu (32) étant agencé dans l'espace (42) entre les sections de longeron (40, 41) et le support d'essieu (34) enjambant l'espace (42) à la hauteur des sections de longeron (40, 41).

14. Châssis de montage selon l'une quelconque des revendications 9 à 13, **caractérisé en ce qu'**une barre de renfort (50) est agencée sur le dépassement (u) des supports d'essieux (34) et/ou une garniture de renfort (53) est agencée sur le côté intérieur des sections de longeron arrière (41), laquelle est reliée de manière fixe, notamment vissée, au support d'essieu (34) respectif et à la section de longeron (41).

15. Châssis de montage selon l'une quelconque des revendications 9 à 14, **caractérisé en ce que** sur les longerons (16), dans la zone de l'agencement d'essieux côté arrière (30), un agencement de soutiens de levage (54) avec des soutiens de levage (55, 56) des deux côtés peut être monté ou est monté au moyen d'une ferrure de montage (58), la ferrure de montage (58) présentant des supports de soutiens de levage (60) pour le montage sur le longeron (16) respectif et un soutien transversal de liaison (59).

16. Véhicule, notamment véhicule routier, avec une tête de traction (2) motorisée, de préférence entraînée par l'avant, et avec un châssis de montage (4) ainsi qu'éventuellement un adaptateur (5), qui sont reliés entre eux au niveau d'un site de montage (15), **caractérisé en ce que** le châssis de montage (4) est réalisé selon au moins l'une quelconque des revendications 1 à 15.

17. Véhicule selon la revendication 15, **caractérisé en ce que** le véhicule (1) présente une carrosserie (12) agencée sur le châssis de montage (4) avec un plancher (14) qui repose et est soutenu sur le châssis de montage (4) et les longerons (16).
